(19) 

Europäisches Patentamt
European Patent Office
Office européen des brevets

(11) **EP 1 901 041 B1**

(12) **EUROPÄISCHE PATENTSCHRIFT**

(45) Veröffentlichungstag und Bekanntmachung des Hinweises auf die Patenterteilung:
**19.01.2011 Patentblatt 2011/03**

(51) Int Cl.:
***G01D 5/38*** *(2006.01)*

(21) Anmeldenummer: **07017181.4**

(22) Anmeldetag: **01.09.2007**

(54) **Positionsmesseinrichtung**

Position measuring device

Dispositif de mesure de position

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.09.2006 DE 102006042743**

(43) Veröffentlichungstag der Anmeldung:
**19.03.2008 Patentblatt 2008/12**

(73) Patentinhaber: **Dr. Johannes Heidenhain GmbH 83301 Traunreut (DE)**

(72) Erfinder:
- **Sändig, Karsten**
  **83349 Palling (DE)**
- **Holzapfel, Wolfgang**
  **83119 Obing (DE)**

(56) Entgegenhaltungen:
**EP-A- 1 674 834     WO-A-02/23131**

**Beschreibung**

Die vorliegende Erfindung betrifft eine optische Positionsmesseinrichtung.

Aus der WO 02/23131 A1 ist eine hochauflösende optische Positionsmesseinrichtung bekannt. Diese umfasst neben einer Reflexions-Maßverkörperung, z.B. ausgebildet als linearer Auflicht-Maßstab, eine relativ in mindestens einer Messrichtung hierzu verschiebbare Abtasteinheit. Auf Seiten der Abtasteinheit ist neben einem Abtastgitter, mehreren optoelektronischen Detektorelementen auch mindestens ein optisches Umlenk- bzw. Reflektorelement in Form eines Retroreflektors angeordnet. Über das Reflektorelement erfolgt eine Rückreflexion der von der Reflexions-Maßverkörperung erstmalig reflektierten Teilstrahlenbündel in Richtung der Reflexions-Maßverkörperung. Dort werden die Teilstrahlenbündel dann anschließend ein zweites Mal reflektiert, bevor schließlich interferierende Teilstrahlenbündel auf die Detektoren gelangen und dort verschiebungsabhängig modulierte Abtastsignale erzeugen. Das Reflektorelement ist in der gattungsgemäßen Positionsmesseinrichtung als Dachkantprisma mit optischer Retroreflektor-Funktionalität ausgebildet und mit seiner Dachkante parallel zur Messrichtung ausgerichtet. Hierbei wirkt das Dachkantprisma in einer Richtung als Retroreflektor, die senkrecht zur Messrichtung x ausgerichtet ist. Zur Erzeugung der phasenverschobenen Abtastsignale sind in den Abtaststrahlengängen polarisationsoptische Verzögerungselemente in Form von λ/4-Plättchen sowie Polarisatoren vor den Detektorelementen angeordnet. Derartige polarisationsoptische Elemente erhöhen jedoch grundsätzlich die Komplexität und damit auch die Kosten entsprechend aufgebaute Positionsmesseinrichtungen.

Eine weitere optische Positionsmesseinrichtung, in der eine zweimalige Beaufschlagung der Reflexions-Maßverkörperung mit Hilfe eines Retroreflektorelements resultiert, ist aus der EP 0 387 520 A2 bekannt. In dieser Abtastkonfiguration ist erforderlich, dass die Teilstrahlenbündel in Strichrichtung der Reflexions-Maßverkörperung geneigt auf diese einfallen. Dadurch ergeben sich in dieser Positionsmesseinrichtung relativ geringe Toleranzen hinsichtlich des Abtastabstands.

Ferner sei zu derartigen Positionsmesseinrichtungen auf die DE 42 01 511 A1 verwiesen. Auch die daraus bekannte Positionsmesseinrichtung benötigt polarisationsoptische Bauelemente im Abtaststrahlengang. Es müssen deshalb die unterschiedlichen Beugungseffizienzen für die beiden Polarisationsachsen der Maßverkörperung berücksichtigt werden. Da das Verhältnis dieser Beugungseffizienzen über die Maßverkörperungsposition hinweg stark schwanken kann, wird in der DE 42 01 511 A1 deshalb vorgeschlagen, zwei zusätzliche λ/2-Plättchen in die Abtaststrahlengänge einzufügen. Dies hat wiederum eine erhebliche Erhöhung des Aufwands bzw. der Kosten derartiger Systeme zur Folge. Außerdem ist eine Signalverbesserung auf diese Weise nur möglich, wenn die Strahlenbündel bei beiden Reflexionen an der Maßverkörperung mit gleichen Beugungseffizienzen für beide Polarisationsachsen gebeugt werden. In der Praxis ist dies aber nicht der Fall, da ein Versatz der Strahlenbündel von der ersten Reflexion zur zweiten Reflexion an der Maßverkörperung vorgesehen werden muss und an den beiden Reflexionsorten unterschiedliche Beugungsverhältnisse vorliegen.

Aufgabe der vorliegenden Erfindung ist es, eine optische Positionsmesseinrichtung zu schaffen, die eine Erzeugung phasenverschobener Abtastsignale ohne den Einsatz von polarisationsoptischen Bauelementen ermöglicht. Ferner soll die Positionsmesseinrichtung möglichst fehlertolerant gegenüber eventuellen Schwankungen des Abtastabstands sein.

Diese Aufgabe wird erfindungsgemäß durch eine Positionsmesseinrichtung mit den Merkmalen des Anspruchs 1 gelöst.

Vorteilhafte Ausführungen der erfindungsgemäßen Positionsmesseinrichtung ergeben sich aus den Maßnahmen in den abhängigen Ansprüchen.

Die erfindungsgemäße Positionsmesseinrichtung zur Erfassung der Relativposition einer Abtasteinheit sowie einer hierzu in mindestens einer Messrichtung beweglichen Reflexions-Maßverkörperung weist seitens der Abtasteinheit mehrere optische Elemente auf, nämlich mindestens ein Retroreflektorelement, mindestens ein Vereinigungsgitter, mindestens ein Abtastgitter sowie mehrere Detektorelemente. Die optischen Elemente in der Abtasteinheit sind vorzugsweise dergestalt angeordnet,

- dass Strahlenbündel und/oder Teilstrahlenbündel des Abtaststrahlengangs mindestens zwei Mal die Reflexions-Maßverkörperung beaufschlagen und hierbei jeweils durch die einfallenden Strahlenbündel und/oder Teilstrahlenbündel einerseits und die reflektierten Teilstrahlenbündel andererseits eine Ebene aufgespannt wird, die senkrecht zur Ebene der Reflexions-Maßverkörperung orientiert ist,
- dass über das Retroreflektorelement eine Richtungsumkehr der darauf einfallenden Teilstrahlenbündel auf die Reflexions-Maßverkörperung senkrecht zur Messrichtung (x) erfolgt und
- dass auf das Vereinigungsgitter ein Paar von Teilstrahlenbündeln nichtparallel auftrifft und das Vereinigungsgitter die darauf eintreffenden Teilstrahlenbündel zur Interferenz bringt, so dass die Detektorelemente phasenverschobene Signale erfassen.

Vorzugsweise trifft das Paar von Teilstrahlenbündeln symmetrisch, unter gleichen Winkeln zur optischen Achse auf das Vereinigungsgitter auf.

In einer möglichen Ausführungsform ist das Vereinigungsgitter als Transmissionsgitter ausgebildet ist und weist eine Teilungsperiode dergestalt aufweist, die gewährleistet, dass eine Ablenkung der auftreffenden Teilstrahlenbündel in mehrere kollinear austretende Beugungsordnungen erfolgt, die nachfolgend angeordnete Detektorelemente beaufschlagen.

Hierbei ist das Vereinigungsgitter vorzugsweise dergestalt ausgebildet, dass darüber eine Ablenkung der einfallenden Teilstrahlenbündel derart erfolgt, dass eine der kollinear austretenden Beugungsordnungen senkrecht zur Teilungsebene propagiert.

Ferner kann das Vereinigungsgitter als Phasengitter ausgebildet sein, bei dem die Steghöhe und Stegbreite derart dimensioniert sind, dass auf den nachgeordneten Detektorelementen drei um 120° phasenversetzte Signale detektierbar sind.

In einer möglichen Ausführungsform sind das Vereinigungsgitter und die Detektorelemente als strukturierte Detektoranordnung ausgebildet.

Das Vereinigungsgitter kann als ortsabhängiges Ablenkgitter ausgebildet sein.

Ferner kann die Abtasteinheit mehrere Abtastgitter sowie mindestens ein Vereinigungsgitter umfassen, wobei diese spiegelsymmetrisch angeordnet sind und wobei die Symmetrieebene senkrecht zur Messrichtung und parallel zur optischen Achse orientiert ist.

Inn einer möglichen Variante kann in der Abtasteinheit ein als Dachkantprisma ausgebildetes Retroreflektorelement angeordnet sein, dessen Dachkante parallel zur Messrichtung orientiert ist.

Alternativ kann das Retroreflektorelement in der Abtasteinheit mehrere kombinierte Ablenk-/Linsenelemente sowie mindestens ein planes Reflektorelement umfassen, wobei die Brennebene der Linsenelemente in der Ebene des mindestens einen planen Reflektorelements liegt.

Hierbei können die Linsenelemente als diffraktive Linsenselemente ausgebildet sein, die Ablenkelemente als Abtastgitter ausgebildet sein und zusammen als kombinierte, diffraktive Gitter-Linsen-Elemente ausgebildet sein.

In einer derartigen Variante können die Linsenelemente als diffraktive Linsenelemente in Form von Zylinderlinsen ausgebildet sein, die in Strichrichtung der Reflexions-Maßverkörperung eine fokussierende Wirkung besitzen.

Ferner ist es möglich, die Linsenelemente als diffraktive Linsenelemente in Form von zylindersymmetrischen Linsenelementen auszubilden, die sowohl in Strichrichtung der Reflexions-Maßverkörperung als auch in Messrichtung eine fokussierende Wirkung besitzen.

In einer weiteren Variante kann das Retroreflektorelement ein planparalleles Trägersubstrat umfassen, auf deren, der Reflexions-Maßverkörperung zugewandten Seite mehrere Gitter angeordnet sind und auf deren, zur Reflexions-Maßverkörperung abgewandten Seite das mindestens eine, plane Reflektorelement angeordnet ist.

Vorteilhafterweise können in einer möglichen Ausführungsform die Auftrefforte der beiden Teilstrahlenbündel am Vereinigungsgitter zusammentreffen.

Ferner kann das mindestens eine Retroreflektorelement als monolytische Baueinheit auf einem Trägerelement ausgebildet sein.

In einer weiteren Ausführungsform umfasst die Abtasteinheit mehrere Abtastgitter sowie mindestens ein Vereinigungsgitter, wobei diese spiegelsymmetrisch angeordnet sind und die Symmetrieebene parallel zur Messrichtung und parallel zur optischen Achse orientiert ist.

In einer derartigen Variante der erfindungsgemäßen Positionsmesseinrichtung ist die Abtasteinheit dergestalt ausgebildet, dass die von einer Lichtquelle emittierten Strahlenbündel nach einer Kollimation über eine Kollimatoroptik

- ein erstes Mal auf die Reflexions-Maßverkörperung auftreffen, wo eine Aufspaltung in zwei zur Abtasteinheit rückreflektierte Teilstrahlenbündel erfolgt, die zwei unterschiedlichen Beugungsordnungen entsprechen,
- die beiden rückreflektierten Teilstrahlenbündel in der Abtasteinheit über das Retroreflektorelement eine Rückreflexion in Richtung Reflexions-Maßverkörperung erfahren, wobei die Teilstrahlenbündel je zweimal Abtastgitter durchlaufen,
- die auf die Reflexions-Maßverkörperung ein zweites Mal auftreffenden Teilstrahlenbündel eine erneute Beugung und Rückreflexion in Richtung der Abtasteinheit erfahren,
- in der Abtasteinheit mindestens ein Paar rückreflektierter Teilstrahlenbündel unter symmetrischen Winkeln zur optischen Achse am gleichen Ort auf das Vereinigungsgitter auftrifft.

In einer weiteren Variante der erfindungsgemäßen Positionsmesseinrichtung ist die Abtasteinheit dergestalt ausgebildet, dass die von einer Lichtquelle emittierten Strahlenbündel nach einer Kollimation über eine Kollimatoroptik

- über ein Aufspaltgitter in der Abtasteinheit eine Aufspaltung in mindestens zwei Teilstrahlenbündel erfolgt, die zwei unterschiedlichen Beugungsordnungen entsprechen und diese Teilstrahlenbündel in Richtung Reflexions-Maßverkörperung propagieren,

- die Teilstrahlenbündel dann ein erstes Mal an unterschiedlichen Orten auf die Reflexions-Maßverkörperung auftreffen, wo jeweils eine Aufspaltung in mehrere zur Abtasteinheit rückreflektierte Teilstrahlenbündel erfolgt, die unterschiedlichen Beugungsordnungen entsprechen,
- die mindestens zwei zurückreflektierten Teilstrahlenbündel in der Abtasteinheit über das Retroreflektorelement eine Rückreflexion in Richtung Reflexions-Maßverkörperung erfahren und wobei die Teilstrahlenbündel je zweimal ein Abtastgitter durchlaufen,
- die auf die Reflexions-Maßverkörperung ein zweites Mal an unterschiedlichen Orten auftreffenden Teilstrahlenbündel eine erneute Beugung und Rückreflexion in Richtung der Abtasteinheit erfahren,
- in der Abtasteinheit mindestens ein Paar rückreflektierter Teilstrahlenbündel unter symmetrischen Winkeln zur optischen Achse am gleichen Ort auf das Vereinigungsgitter auftrifft.

Hierbei können die Abtastgitter in der Abtasteinheit als Fresnel-Zylinderlinsen ausgebildet sein, deren Brennlinien sich in der Ebene der Reflektorelemente befinden und die Teilungsperiode des Aufspaltgitters identisch zur Teilungsperiode des Vereinigungsgitters und zur Teilungsperiode der Reflexions-Maßverkörperung gewählt sein.

Ferner kann hierbei die Teilungsperiode der Reflexions-Maßverkörperung dergestalt gewählt werden, dass sich die in Richtung Abtasteinheit zurückreflektierten Teilstrahlenbündel vor dem ersten Auftreffen auf ein Abtastgitter überkreuzen.

Desweiteren wird vorzugsweise die Teilungsperiode der Reflexions-Maßverkörperung kleiner als die Wellenlänge der verwendeten Lichtquelle gewählt ist.

Ferner kann das mindestens eine Retroreflektorelement als kombiniertes Ablenk-/Linsenelement ausgebildet werden.

In einer weiteren Variante der erfindungsgemäßen Positionsmesseinrichtung ist die Abtasteinheit dergestalt ausgebildet, dass die von einer Lichtquelle emittierten Strahlenbündel nach einer Kollimation über eine Kollimatoroptik

- über ein Aufspaltgitter eine Aufspaltung in zwei Teilstrahlenbündel erfolgt,
- die beiden Teilstrahlenbündel dann auf ein Aufspalt-Hilfsgitter gelangen, mit dem eine Umlenkung zumindest eines Teils der Teilstrahlenbündel dergestalt erfolgt, dass die in Richtung der Reflexions-Maßverkörperung propagierenden Teilstrahlenbündel am gleichen Auftreffort auf die Reflexions-Maßverkörperung auftreffen und
- die auf die Reflexions-Maßverkörperung auftreffenden Teilstrahlenbündel jeweils in mehrere zur Abtasteinheit rückreflektierte Teilstrahlenbündel aufgespalten werden, die unterschiedlichen Beugungsordnungen entsprechen,
- die mindestens zwei zurückreflektierten Teilstrahlenbündel in der Abtasteinheit über das Retroreflektorelement eine Rückreflexion in Richtung Reflexions-Maßverkörperung erfahren, wobei die Teilstrahlenbündel je zweimal ein Abtastgitter durchlaufen,
- die auf die Reflexions-Maßverkörperung ein zweites Mal am gleichen Ort auftreffenden Teilstrahlenbündel eine erneute Beugung und Rückreflexion in Richtung der Abtasteinheit erfahren,
- in der Abtasteinheit mindestens ein Paar rückreflektierter Teilstrahlenbündel an unterschiedlichen Orten auf ein Vereinigungs-Hilfsgitter auftrifft, wo eine erneute Beugung und Aufspaltung erfolgt, so dass mindestens zwei weiter propagierende Teilstrahlenbündel unter symmetrischen Winkeln zur optischen Achse am gleichen Ort auf das Vereinigungsgitter auftreffen.

In einer weiteren Variante der erfindungsgemäßen Positionsmesseinrichtung ist die Abtasteinheit dergestalt ausgebildet, dass die von einer Lichtquelle emittierten Strahlenbündel nach einer Kollimation über eine Kollimatoroptik

- ein erstes Mal auf die Reflexions-Maßverkörperung auftreffen, die als Auflicht-Beugungsgitter ausgebildet ist, wo eine Aufspaltung in zwei zur Abtasteinheit rückreflektierte Teilstrahlenbündel erfolgt, die zwei unterschiedlichen Beugungsordnungen entsprechen,
- die beiden rückreflektierten Teilstrahlenbündel in der Abtasteinheit über das Retroreflektorelement eine Rückreflexion in Richtung Reflexions-Maßverkörperung erfahren, wobei die Teilstrahlenbündel je zweimal ein Abtastgitter durchlaufen und beim ersten Durchlauf durch die Abtastgitter eine Punktfokussierung der Teilstrahlenbündel auf den gleichen Auftreffort an einem planen Reflektorelement resultiert,
- die auf die Reflexions-Maßverkörperung ein zweites Mal auftreffenden Teilstrahlenbündel eine erneute Beugung und Rückreflexion in Richtung der Abtasteinheit erfahren,
- in der Abtasteinheit mindestens ein Paar rückreflektierter Teilstrahlenbündel unter symmetrischen Winkeln zur optischen Achse am gleichen Ort auf das Vereinigungsgitter auftrifft.

Weitere Einzelheiten und Vorteile der vorliegenden Erfindung seien anhand der nachfolgenden Beschreibung von Ausführungsbeispielen in den Figuren erläutert.

Es zeigt hierbei:

| | |
|---|---|
| Figur 1a | einen ersten Teil des Abtaststrahlenganges einer ersten Ausführungsform der erfindungsgemäßen Po- sitionsmesseinrichtung; |
| Figur 1b | einen zweiten Teil des Abtaststrahlenganges der ersten Ausführungsform der erfindungsgemäßen Po- sitionsmesseinrichtung; |
| Figur 1c und 1d | je eine Ansicht der Ober- und Unterseite der Abtast- platte der ersten Ausführungsform der erfindungs- gemäßen Positionsmesseinrichtung; |
| Figur 2a | einen ersten Teil des Abtaststrahlenganges einer Abwandlung der ersten Ausführungsform der erfin- dungsgemäßen Positionsmesseinrichtung; |
| Figur 2b | den Teil des Abtaststrahlengangs aus Figur 2a in ei- ner anderen Ansicht; |
| Figur 2c | einen zweiten Teil des Abtaststrahlenganges der erfindungsgemäßen Positionsmesseinrichtung ge- mäß Figur 2a; |
| Figur 2d | den Teil des Abtaststrahlengangs aus Figur 2c in ei- ner anderen Ansicht; |
| Figur 2e | eine Draufsicht auf die Abtastplatte der erfindungsge- mäßen Positionsmesseinrichtung gemäß Figur 2a; |
| Figur 3a | einen ersten Teil des Abtaststrahlenganges einer zweiten Ausführungsform der erfindungsgemäßen Positionsmesseinrichtung; |
| Figur 3b | einen zweiten Teil des Abtaststrahlenganges der zweiten Ausführungsform der erfindungsgemäßen Positionsmesseinrichtung; |
| Figur 3c und 3d | je eine Ansicht der Ober- und Unterseite der Abtast- platte der zweiten Ausführungsform der erfindungs- gemäßen Positionsmesseinrichtung; |
| Figur 4a | einen ersten Teil des Abtaststrahlenganges einer ersten Abwandlung der zweiten Ausführungsform der erfindungsgemäßen Positionsmesseinrichtung; |
| Figur 4b | einen zweiten Teil des Abtaststrahlenganges der Ausführungsform der erfindungsgemäßen Positions- messeinrichtung gemäß Figur 4a; |
| Figur 4c und 4d | je eine Ansicht der Ober- und Unterseite der Abtast- platte der erfindungsgemäßen Positionsmessein- richtung gemäß Figur 4a; |
| Figur 5a | einen ersten Teil des Abtaststrahlenganges einer zweiten Abwandlung der zweiten Ausführungsform der erfindungsgemäßen Positionsmesseinrichtung; |
| Figur 5b | den Teil des Abtaststrahlengangs aus Figur 5a in ei- ner anderen Ansicht; |
| Figur 5c | einen zweiten Teil des Abtaststrahlenganges der erfindungsgemäßen Positionsmesseinrichtung ge- mäß Figur 5a; |
| Figur 5d | den Teil des Abtaststrahlengangs aus Figur 5c in ei- ner anderen Ansicht; |
| Figur 5e | eine Draufsicht auf die Abtastplatte der erfindungsge- mäßen Positionsmesseinrichtung gemäß Figur 5a; |
| Figur 6a | einen ersten Teil des Abtaststrahlenganges einer dritten Ausführungsform der erfindungsgemäßen Po- sitionsmesseinrichtung; |
| Figur 6b | einen zweiten Teil des Abtaststrahlenganges der dritten Ausführungsform der erfindungsgemäßen Po- sitionsmesseinrichtung; |

| Figur 6c und 6d | je eine Ansicht der Ober- und Unterseite der Abtast- platte der dritten Ausführungsform der erfindungsgemäßen Positionsmesseinrichtung; |
| Figur 7a | einen ersten Teil des Abtaststrahlenganges einer vierten Ausführungsform der erfindungsgemäßen Po- sitionsmesseinrichtung; |
| Figur 7b | einen zweiten Teil des Abtaststrahlenganges der vierten Ausführungsform der erfindungsgemäßen Po- sitionsmesseinrichtung; |
| Figur 7c und 7d | je eine Ansicht der Ober- und Unterseite der Abtast- platte der vierten Ausführungsform der erfindungs- gemäßen Positionsmesseinrichtung: |
| Figur 8a | einen ersten Teil des Abtaststrahlenganges einer fünften Ausführungsform der erfindungsgemäßen Po- sitionsmesseinrichtung; |
| Figur 8b | einen zweiten Teil des Abtaststrahlenganges der fünften Ausführungsform der erfindungsgemäßen Po- sitionsmesseinrichtung; |
| Figur 8c und 8d | je eine Ansicht der Ober- und Unterseite der Abtast- platte der fünften Ausführungsform der erfindungs- gemäßen Positionsmesseinrichtung. |

Über die nachfolgend im Detail beschriebenen Ausführungsformen der erfindungsgemäßen Positionsmessein-richtung lassen sich die oben erwähnten Probleme lösen. Bevor die einzelnen Beispiele anhand der Figuren im Detail beschrieben werden, seien zunächst die Gemeinsamkeiten der nachfolgenden Varianten erläutert.

So liegt den verschiedenen Ausführungsformen jeweils ein ähnlicher Abtaststrahlengang zugrunde. Ein kollimiertes Strahlenbündel einer geeigneten Laser-Lichtquelle trifft in Strichrichtung (= y-Richtung) der Messteilung gesehen senkrecht auf eine Reflexions-Maßverkörperung. Das heißt, dass alle auf die Reflexions-Maßverkörperung auftreffenden und hiervon reflektierten Strahlenbündel senkrecht zur Strichrichtung orientiert sind und damit in einer Ebene liegen, die von der Messrichtung und der normalen auf die Reflexions-Maßverkörperung aufgespannt wird. Je nach Ausführungsform kann vorgesehen sein, dass das kollimierte Strahlenbündel vorher abgelenkt bzw. aufgespalten wird, was über ein oder zwei Aufspaltgitter im Strahlengang erfolgen kann. Es ist jedoch auch möglich, dass keine derartige Ablenkung bzw. Aufspaltung erfolgt

An der Reflexions-Maßverkörperung erfolgt eine Reflexion, Aufspaltung und Rückreflexion des bzw. der einfallenden Strahlenbündel in mindestens je zwei Teilstrahlenbündel (+/-1. Beugungsordnung). Diese treffen dann in Messrichtung x vom hinlaufenden Teilstrahlenbündel jeweils getrennt auf separate Abtastgitter in der Abtasteinheit. Diese Abtastgitter, nachfolgend angeordnete Reflektorelemente oder evtl. zusätzliche 90°- oder Tripel-Prismen bewirken eine Richtungsumkehr des transversalen Strahlwinkels (d.h. eine transversale Retroreflexion) und kompensieren dadurch eine fehlerverursachende transversale Strahlablenkung bei einer eventuellen Moire-Verkippung der Maßverkörperung (sog. optische Moiré-Kompensation). Diese würde ansonsten zu einem deutlichen Einbruch im Signal-Modulationsgrad führen. Unter einer Moiré-Verkippung ist hierbei eine Verkippung der Reflexions-Maßverkörperung und der Abtasteinheit um eine Achse senkrecht auf die Reflexions-Maßverkörperung zu verstehen.

Die Teilstrahlenbündel erfahren demzufolge eine Retroreflexion zurück auf die Reflexions-Maßverkörperung, wo sie erneut gebeugt werden. Die Gitterkonstanten bzw. Teilungsperioden der Abtastgitter und der Reflexions-Maßverkörperung sind dabei so gewählt, dass nach der zweiten Beugung an der Reflexions-Maßverkörperung die auslaufenden Teilstrahlenbündel unter einen symmetrischen Winkel auf ein Vereinigungsgitter in der Abtasteinheit treffen und dort zur Interferenz gebracht werden. Das Vereinigungsgitter hat dazu eine Teilungsperiode, die so gewählt wird, dass jeweils eine der ersten Beugungsordnungen der auftreffenden Teilstrahlenbündel in Richtung der optischen Achse weiter propagiert. Damit überlagern sich jeweils die in 0. und +/-1. resultierender Beugungsordnung am Vereinigungsgitter austretenden Teilstrahlenbündel und interferieren miteinander. Die Struktur des Vereinigungsgitters, d.h. dessen Phasentiefe, Stegbreite und evtl. die Anordnung mehrerer Stege pro Periode (Überstruktur), wird so gewählt, dass eine definierte Phasenverschiebung zwischen den austretenden Teilstrahlenbündeln entsteht, die vorzugsweise zu 120° gewählt wird. Alternativ kann das Vereinigungsgitter auch so ausgelegt werden, dass wiederum beide Teilstrahlenbündel in den resultierenden Beugungsordnungen überlagert werden und die resultierenden +/-1. und +/-2. Beugungsordnungen detektiert werden. Die Auslegung der Struktur des Vereinigungsgitters erfolgt in diesem Fall derart, dass vier um jeweils ca. 90° phasenverschobene Signale in den vier detektierten Beugungsordnungen entstehen. Die phasenverschobenen Signale werden in einer nachfolgenden Elektronik verstärkt und in bekannter Weise zu offsetfreien 0°- und 90°-Signalen gewandelt.

Alternativ kann das Vereinigungsgitter auch als sog. ortsabhängiges Ablenkgitter ausgebildet werden. Ferner ist es möglich, das Vereinigungsgitter und die Detektorelemente zusammen in einer Baueinheit als sog. strukturierte Detektoranordnung zusammenzufassen.

Eine derartige Erzeugung phasenverschobener Signale ohne Verwendung polarisationsoptischer Bauteile reduziert erheblich die Herstellkosten und Komplexität der entsprechenden Positionsmesseinrichtungen. Da Polarisatoren im Mittel die Hälfte der einfallenden Strahlleistung absorbieren, wird zudem die Energieeffizienz und damit das Positionsrauschen der Positionsmesseinrichtung gegenüber bekannten Systemen mit polarisationsoptischen Bauteilen deutlich verbessert.

Um die resultierenden Fehler der Positionsmesseinrichtung bei eventuellen Verkippungen der Reflexions-Maßverkörperung klein zu halten und große Toleranzen bzgl. des Abtastabstandes zu erreichen, wird die Abtastoptik (im Strahlenverlauf zwischen der Aufspaltung und Vereinigung der Teilstrahlenbündel) symmetrisch zu einer Ebene parallel zur Strichrichtung der Messteilung auf der Reflexions-Maßverkörperung und zur optischen Achse aufgebaut und die Beleuchtungsrichtung parallel zur optischen Achse gewählt. Dadurch ergeben sich automatisch gleiche optische Weglängen für beide interferierenden Teilstrahlenbündel. In Strichrichtung betrachtet treffen die Teilstrahlenbündel senkrecht auf die Reflexions-Maßverkörperung und werden deshalb bei Abstandsänderungen nicht in Strichrichtung verschoben. In Messrichtung betrachtet, treten je nach Ausführungsform entweder keine Strahlverschiebungen oder nur symmetrische Strahlverschiebungen für beide Teilstrahlenbündel auf. Diese Verhältnisse bzgl. der Strahlverschiebungen ergeben einen effektiven Messort, der auch bei Änderungen des Abtastabstandes konstant bleibt. Damit ist eine wichtige Anforderung an hochgenaue Positionsmesseinrichtungen erfüllt.

Die nachfolgend beschriebenen Ausführungsbeispiele, die allesamt auf den vorab erläuterten erfindungsgemäßen Grundprinzipien basieren, unterscheiden sich u.a. durch die Lage des neutralen Drehpunktes, ihre Verschmutzungsempfindlichkeit sowie durch die jeweilige Energieeffizienz.

Erste Ausführungsform

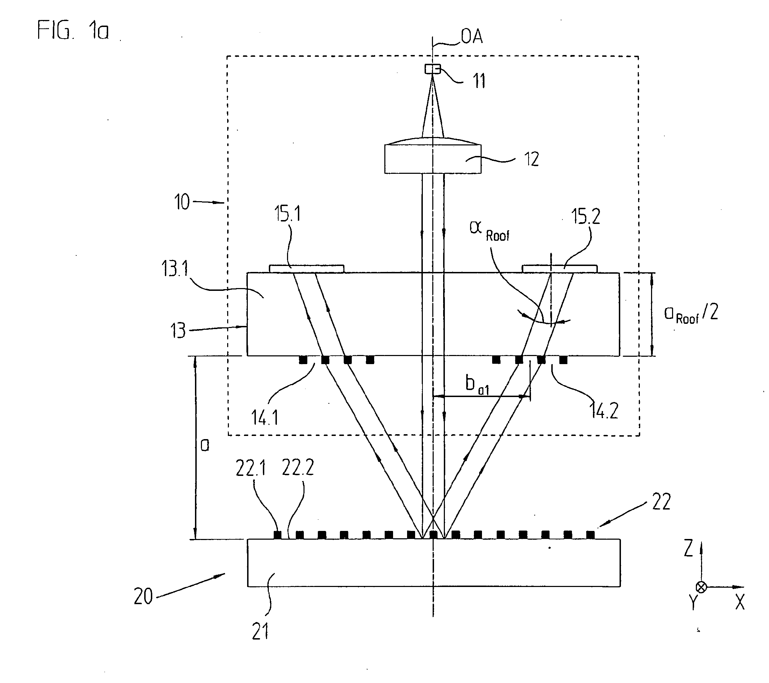

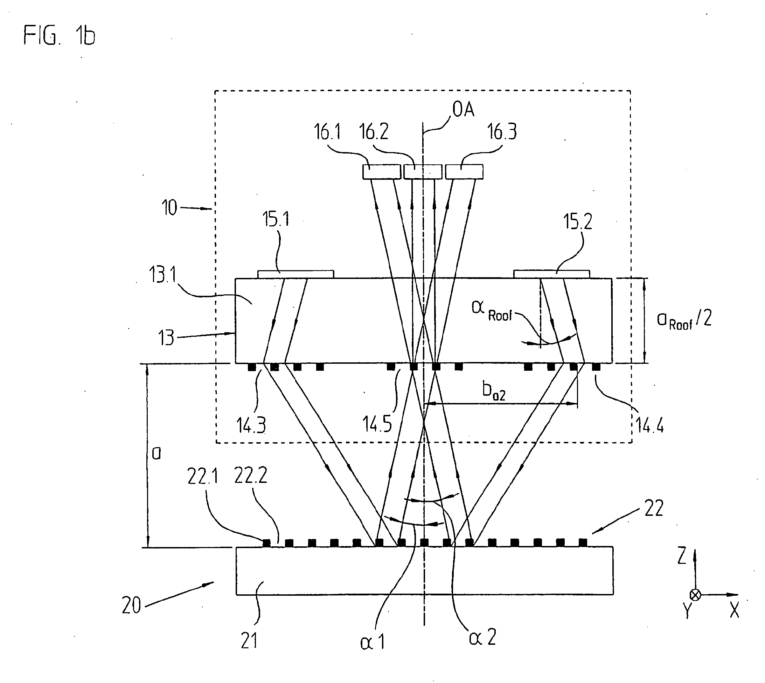

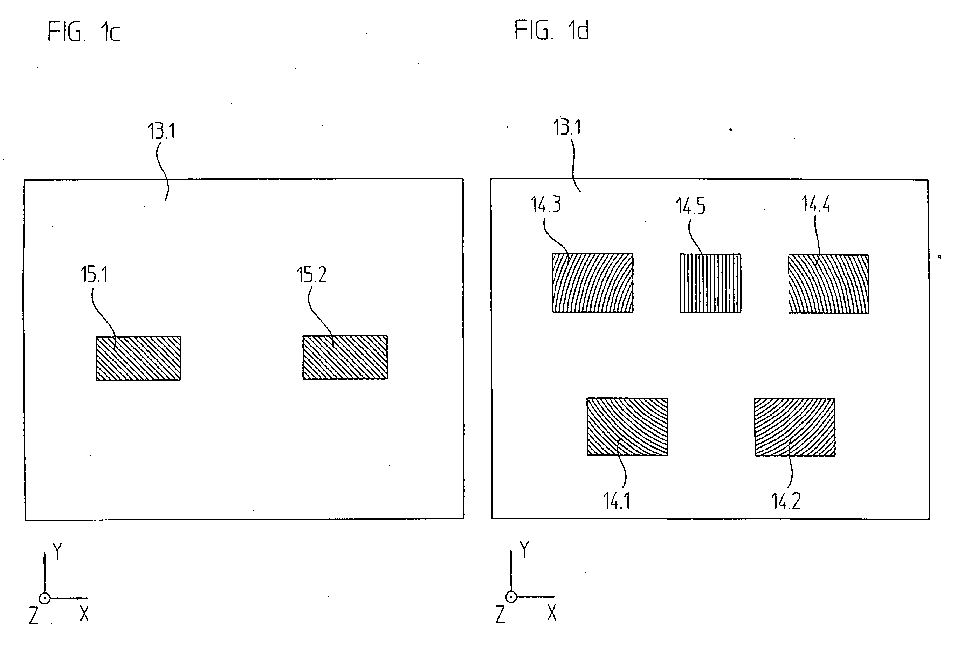

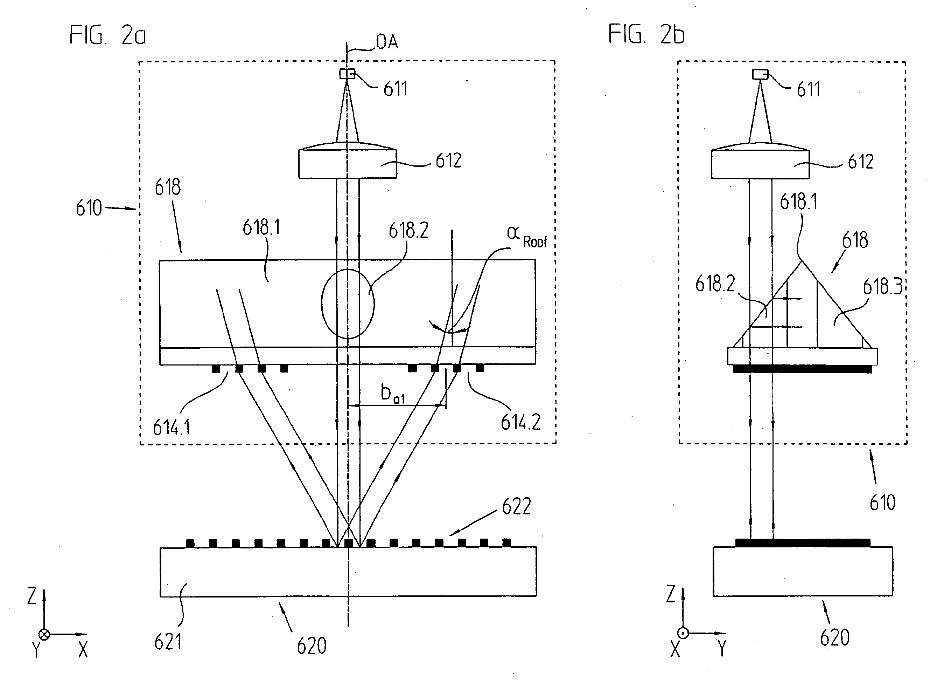

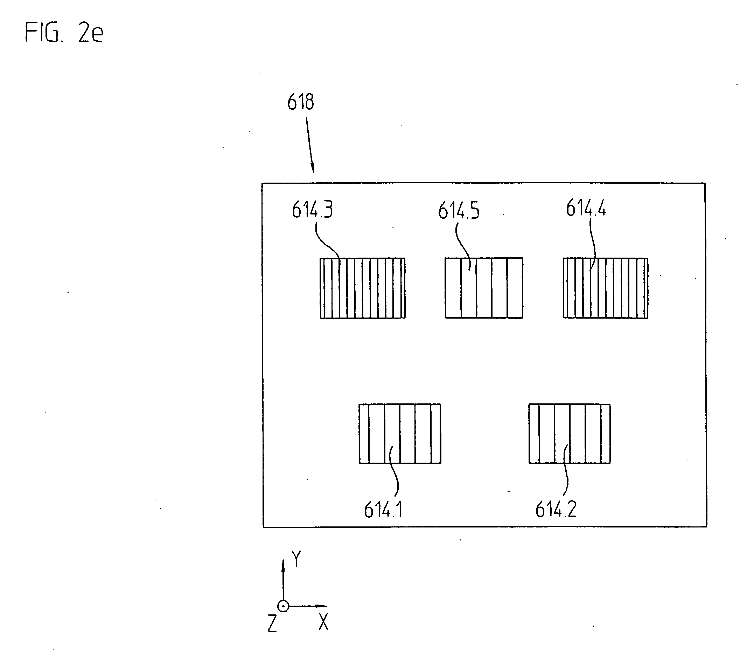

Anhand der Figuren 1a - 1d wird nachfolgend eine erste Ausführungsform der erfindungsgemäßen Positionsmesseinrichtung erläutert. Die Figuren 1a und 1b zeigen hierbei jeweils in schematisierter Form Teil-Abtaststrahlengänge in einer seitlichen Ansicht in der x-z-Ebene. In Figur 1a ist der Abtaststrahlengang von der Lichtquelle 11 bis zum Auftreffen der Teilstrahlenbündel auf den Reflektorelementen 15.1, 15.2 dargestellt, Figur 2b zeigt den Abtaststrahlengang ab dem Auftreffen der Teilstrahlenbündel auf den Reflektorelementen 15.1, 15.2 bis zu den Detektorelementen 16.1, 16.2, 16.3. Die Figuren 1c und 1d zeigen jeweils Draufsichten auf die Ober- und Unterseite der Abtastplatte 13 mit den dort angeordneten optischen Elementen.

Die erfindungsgemäße Positionsmesseinrichtung umfasst in diesem Beispiel eine Reflexions-Maßverkörperung 20 sowie eine relativ hierzu in mindestens einer Messrichtung x bewegliche Abtasteinheit 10. Mit der Reflexions-Maßverkörperung 20 und der Abtasteinheit 10 sind in bekannter Art und Weise die Objekte gekoppelt, deren Relativposition mit Hilfe der Positionsmesseinrichtung zu bestimmen ist. Hierbei kann es sich etwa um Maschinenteile handeln, deren Relativposition präzise erfasst werden muss. Die mittels der Positionsmesseinrichtung erzeugten Signale bzw. Positionsdaten werden von einer - nicht dargestellten - Folgeelektronik oder Auswerteeinheit beispielsweise zur Steuerung der Maschine weiterverarbeitet.

Im vorliegenden Ausführungsbeispiel ist eine Positionsmesseinrichtung zur Erfassung von Linearbewegungen mit einer sich linear erstreckenden Reflexions-Maßverkörperung 20 dargestellt; selbstverständlich können auch rotatorische Positionsmesseinrichtungen auf Basis der erfindungsgemäßen Überlegungen realisiert werden.

Im Folgenden sei der Abtaststrahlengang der ersten Ausführungsform der erfindungsgemäßen Positionsmesseinrichtung anhand der Figuren 1a - 1d im Detail beschrieben.

Das von Lichtquelle 11, z.B. einer Laser-Lichtquelle, emittierte Strahlenbündel wird im dargestellten Beispiel zunächst über eine Kollimatoroptik 12 kollimiert, d.h. in ein paralleles Strahlenbündel umgewandelt. Anschließend durchtritt das kollimierte Strahlenbündel unabgelenkt, das Trägersubstrat 13.1 einer Abtastplatte 13. Das Trägersubstrat 13.1 ist als planparallele Glasplatte ausgebildet. Auf deren Ober- und Unterseite sind verschiedene optische Elemente angeordnet, auf deren Funktion im Abtaststrahlengang nachfolgend noch im Detail eingegangen wird. Diese Elemente sind in den Ansichten der Figuren 1c und 1d erkennbar.

Das kollimierte Strahlenbündel trifft nach dem Passieren der Abtastplatte 13 ein erstes Mal auf die Reflexions-Maßverkörperung 20, nämlich auf die sich dort in Messrichtung x erstreckende Messteilung 22. Die Messteilung 22 besteht in bekannter Art und Weise aus einer in Messrichtung x periodischen Anordnung von Teilbereichen 22.1, 22.2 mit unterschiedlichen optischen Reflexionseigenschaften. Die strichförmigen Teilbereiche 22.1, 22.2 erstrecken sich senkrecht zur Messrichtung x in der angegebenen Richtung y (nachfolgend auch Strichrichtung genannt) und sind auf einem Trägerkörper 21 der Reflexions-Maßverkörperung 20 angeordnet. Im dargestellten Beispiel ist die Messteilung 22 als Auflicht-Phasengitter ausgebildet, bei dem die Teilbereiche 22.1, 22.2 eine unterschiedliche phasenschiebende Wirkung auf die darauf eintreffenden Strahlenbündel besitzen. Vorteilhaft ist ferner eine Auslegung der Messteilung 22 dahingehend, dass die Beugungseffizienz in den ersten Ordnungen maximiert wird. Die Teilungsperiode der Messteilung 22 sei nachfolgend als $TP_M$ bezeichnet und ist definiert als die Länge zweier aufeinanderfolgender Teilbereiche 22.1, 22.2 in Messrichtung x. In einer möglichen Ausführungsform wird die Teilungsperiode $TP_M$ im Bereich zwischen 1.1 * λ und 10 * λ gewählt, wobei λ die Wellenlänge der verwendeten Lichtquelle 11 ist. Im Fall einer als VCSEL oder LED ausgebildeten Lichtquelle mit λ = 860nm, könnte die Teilungsperiode $TP_M$ demzufolge $TP_M$ = 2μm betragen.

Nach dem ersten Auftreffen auf der Reflexions-Maßverkörperung 20 auf einem ersten Auftreffort resultiert eine Aufspaltung des einfallenden Strahlenbündels in zwei zur Abtasteinheit 10 zurückreflektierte Teilstrahlenbündel, die den +/- 1. Beugungsordnungen entsprechen. In der Abtasteinheit 10 durchlaufen die zurückreflektierten Teilstrahlenbündel zunächst die in Figur 1a dargestellten Abtastgitter 14.1, 14.2 auf der Unterseite der Abtastplatte 13. Die Abtastgitter 14.1, 14.2 sind im vorliegenden Beispiel als Transmissionsgitter ausgebildet. Von den Abtastgittern 14.1, 14.2 werden die Teilstrahlenbündel in definierter Art und Weise abgelenkt und gelangen dann auf plane Reflektorelemente 15.1, 15.2. auf der Oberseite der Abtastplatte 13. Die beiden zuerst durchlaufenen Abtastgitter 14.1, 14.2 besitzen die gleiche Teilungsperiode, die nachfolgend als $TP_{AG1}$ bezeichnet wird. Im vorliegenden, ersten Ausführungsbeispiel wird die Teilungsperiode $TP_{AG1}$ der Abtastgitter 14.1, 14.2 unterschiedlich zur Teilungsperiode $TP_M$ der Messteilung 22 gewählt. Aufgrund dieser Wahl der Teilungsperioden $TP_{AG1}$ propagieren die Teilstrahlenbündel nach dem Durchtreten der Abtastgitter 14.1, 14.2 nicht senkrecht zur Abtastplatte 13.

Wie in Figur 1b dargestellt, erfolgt an den Reflektorelementen 15.1, 15.2 eine Rückreflexion der Teilstrahlenbündel in Richtung der Reflexions-Maßverkörperung 20. Vor dem zweiten Auftreffen auf die Reflexions-Maßverkörperung 20 an zweiten Auftrefforten, die sich vom ersten Auftreffort unterscheiden, durchlaufen die Teilstrahlenbündel die beiden weiteren Abtastgitter 14.3, 14.4, die ebenfalls auf der Unterseite der Abtastplatte 13 angeordnet sind. Über diese Abtastgitter 14.3, 14.4 erfolgt eine nochmalige Umlenkung der transmittierten Teilstrahlenbündel in Richtung des jeweiligen zweiten Auftreffortes auf der Reflexions-Maßverkörperung 20. Die beiden nunmehr durchlaufenen Abtastgitter 14.3, 14.4 besitzen die gleiche Teilungsperiode, die nachfolgend als $TP_{AG2}$ bezeichnet wird.

Wie in der DE 10 2005 029 917.2 der Anmelderin beschrieben wird, weisen die Abtastgitter 14.1 - 14.4 eine optische Doppelfunktion auf. Sie wirken einerseits in Messrichtung x wie ein regelmäßig periodisches Ablenkgitter mit den Teilungsperioden $TP_{AG1}$ bzw. $TP_{AG2}$. In der Strichrichtung y in der Maßverkörperungsebene andererseits wirken sie wie Zylinderlinsen, die die einfallenden Strahlenbündel auf die Reflektorelemente 15.1, 15.2 fokussieren und anschließend wieder kollimieren. Im dargestellten Beispiel der Figuren 1 a und 1b fokussieren die Abtastgitter 14.1, 14.2, während die Abtastgitter 14.3, 14.4 die austretenden Strahlenbündel wieder kollimieren. Die Kombination aus Reflektorelement und Linse stellt - wie in der DE 10 2005 029 917.2 der Anmelderin beschrieben - ein Retroreflektorelement für die Strichrichtung y der Maßverkörperung 20 dar. Aufgrund des Versatzes in y-Richtung zwischen den Strahlenbündeln und den optischen Achsen der Zylinderlinsen wird gleichzeitig ein Versatz in y-Richtung zwischen den ersten und zweiten Auftrefforten auf der Reflexions-Maßverkörperung 20 bewirkt. Damit die Abtastgitter gleichzeitig all diese optischen Funktionen übernehmen können, müssen sie als Gitter mit gekrümmten Gitterlinien ausgebildet werden, wie dies in der erwähnten DE 10 2005 029 917.2 beschrieben und in der nachfolgenden Fig. 1d schematisiert angedeutet ist; nachfolgend sei in Bezug auf derartige Gitter-Strukturen auch von diffraktiven Ablenk/Linsenelementen die Rede.

Die Baueinheit, bestehend aus der Abtastplatte 13 mit dem Trägersubstrat 13.1, den Abtastgittern 14.1, 14.2, 14.3, 14.4 sowie den planen Reflektorelementen 15.1, 15.2 fungiert im dargestellten ersten Ausführungsbeispiel demzufolge als Retroreflektorelement auf Seiten der Abtasteinheit 10. Über dieses erfolgt eine Rück-Umlenkung der von der Reflexions-Maßverkörperung 20 kommenden Teilstrahlenbündel in Richtung der Reflexions-Maßverkörperung 20, um diese ein zweites Mal zu beaufschlagen. Die Retroreflexion erfolgt hierbei in der angegebenen y-Richtung.

Eine alternative Ausbildung des Retroreflektorelements wird in der nachfolgenden Abwandlung der ersten Ausführungsform der erfindungsgemäßen Positionsmesseinrichtung anhand der Figuren 2a - 2e erläutert.

Auf der Reflexions-Maßverkörperung 20 resultiert im dargestellten ersten Ausführungsbeispiel der Figuren 1a - 1d an den jeweiligen zweiten Auftrefforten eine erneute Beugung und Rückreflexion der auftreffenden Teilstrahlenbündel in Richtung der Abtasteinheit 10. Die zur Signalerzeugung genutzten Teilstrahlenbündel treffen hierbei unter symmetrischen Winkeln α1, α2 bzgl. der optischen Achse OA am gleichen Ort auf ein Vereinigungsgitter 14.5, welches auf der Unterseite der Abtastplatte 13 angeordnet ist.

Die optische Achse OA ist hierbei parallel zu der in den Figuren angegebenen Richtung z orientiert. Die Richtung z steht hierbei senkrecht auf der durch die Messrichtung x und der Strichrichtung y aufgespannten Ebene.

Nach erneuter Beugung am Vereinigungsgitter 14.5 propagieren schließlich drei interferierende Paare von Teilstrahlenbündeln in Richtung der drei nachgeordneten Detektorelemente 16.1, 16.2, 16.3. Hierzu ist die Teilungsperiode $TP_{VG}$ des in diesem Beispiel ebenfalls als Transmissionsgitter ausgebildeten Vereinigungsgitters 14.5 dergestalt gewählt, dass mehrere resultierende Teilstrahlenbündel austreten, die jeweils aus kollinear überlagerten und damit interferierenden Anteilen beider einfallender Teilstrahlenbündel bestehen. Besonders vorteilhaft ist es, wenn jeweils eine der beiden ersten Beugungsordnungen des Vereinigungsgitters 14.5 die beiden einfallenden Teilstrahlenbündel parallel zur optischen Achse OA ablenkt. Hierbei interferieren Teilstrahlenbündel aus Beugungsordnungen, deren Beugungsordnungen sich um zwei unterscheiden.

Im Fall der Relativverschiebung von Reflexions-Maßverkörperung 20 und Abtasteinheit 10 resultieren jeweils Gangunterschiede zwischen den Paaren von interferierenden Teilstrahlenbündeln, die in Richtung der Detektorelemente 16.1, 16.2, 16.3 propagieren. An den Detektorelementen 16.1, 16.2 16.3 liegen dann verschiebungsabhängig modulierte Signale, wobei diese von Detektorelement zu Detektorelement um je 120° phasenverschoben sind. Diese phasenverschobene Signale können von nachgeordneten - nicht dargestellten - Folgeelektroniken in bekannter Art und Weise weiterverarbeitet werden.

Die Phasenverschiebung der Signale kann durch eine geeignete Ausgestaltung des Vereinigungsgitters 14.5 sichergestellt werden, wie dies etwa aus der EP 163 362 B1 bekannt ist. Hierbei wird die unterschiedliche Phasenverschiebung der einzelnen Beugungsordnungen bei der Beugung am Vereinigungsgitter 14.5 durch die Wahl der Gitterstruktur entsprechend eingestellt. Vorteilhaft ist z.B. eine Phasengitterstruktur mit einer Stegbreite, die 1/3 oder 2/3 der Periodizität $TP_{VG}$ des Vereinigungsgitters 14.4 entspricht; der Phasenhub der Stege wird zu 120° oder 240° gewählt. Alternativ hierzu können aber auch sog. Übergitterstrukturen auf Seiten des Vereinigungsgitters 14.5 verwendet werden, wie sie z.B. aus der EP 446 691 B1 bekannt sind.

Um den erläuterten Abtaststrahlengang zu realisieren, sind neben den bereits oben diskutierten Dimensionierungsregeln weitere bestimmte Dimensionierungsregeln bzgl. der Teilungsperioden der verschiedenen Abtastgitter 14.1, 14.2, 14.3, 14.4 einzuhalten. Diese seien nachfolgend kurz skizziert.

Der Abstand $b_{a1}$ des ersten Auftrefforts der Teilstrahlenbündel an der Unterseite der Abtastplatte 13.1 nach dem ersten Auftreffen auf der Reflexions-Maßverkörperung 20 (siehe Figur 1a) von der optischen Achse OA ergibt sich gemäß nachfolgender Beziehung:

$$b_{a1} = a \cdot Tan(ArcSin(\lambda / TP_M)) \qquad \text{(Gl. 1.1)}$$

mit:

a := Abtastabstand zwischen Reflexions-Maßverkörperung und Abtasteinheit
λ: := Wellenlänge der Lichtquelle
$TP_M$ := Teilungsperiode der Messteilung

Verfolgt man den Strahlengang vom Vereinigungsgitter 14.5 rückwärts, so erhält man den Abstand $b_{a2}$ des Auftrefforts, an dem das Teilstrahlenbündel auf der Unterseite der Abtastplatte 13 vor dem zweiten Auftreffen auf die Reflexions-Maßverkörperung 20 (Figur 1b) auftrifft:

$$b_{a2} = a \cdot ((Tan(ArcSin(\lambda / TP_{VG})) + Tan(ArcSin(\lambda / TP_{VG} + \lambda / TP_M)))) \quad \text{(Gl. 1.2)}$$

mit:

$TP_{vG}$ := Teilungsperiode des Vereinigungsgitters

Aus dem optischen Weg $a_{Roof}$, der zwischen den zuerst durchlaufenen Abtastgittern 14.1, 14.2 und den anschließend durchlaufenen Abtastgittern 14.3, 14.4 in der Abtastplatte 13 zurückgelegt wird, ergibt sich der Strahlwinkel $\alpha_{Roof}$ zwischen den beiden Abtastgittern 14.1, 14.2 einerseits und den Abtastgittern 14.3, 14.4 andererseits:

$$\alpha_{Roof} = ArcTan\left( \frac{b_{a1} - b_{a2}}{a_{Roof}} \right) \qquad \text{(Gl. 1.3)}$$

Daraus können nun die erforderlichen Teilungsperioden $TP_{AG1}$, $TP_{AG2}$ der Abtastgitter 14.1 - 14.4 bestimmt werden:

$$\frac{1}{TP_{AG1}} = \frac{1}{TP_M} - \frac{n_a * \sin(\alpha_{Roof})}{\lambda} \qquad\qquad (Gl.\ 1.4)$$

$$\frac{1}{TP_{AG2}} = \frac{1}{TP_M} + \frac{1}{TP_{VG}} + \frac{n_a * \sin(\alpha_{Roof})}{\lambda} \qquad\qquad (Gl.\ 1.5)$$

mit:

$n_a$ := Brechungsindex der Abtastplatte

Maßgeblich für die Eigenschaften einer derartigen Positionsmesseinrichtung in der Praxis ist grundsätzlich die Lage des sog. neutralen Drehpunkts. Unter dem neutralen Drehpunkt sei hierbei derjenige Punkt verstanden, um den die Reflexions-Maßverkörperung verkippt werden kann, ohne dass sich der von der Positionsmesseinrichtung angezeigte Positionswert ändert.

Ein Abtaststrahlengang gemäß der ersten Ausführungsform der erfindungsgemäßen Positionsmesseinrichtung hat nunmehr zur Folge, dass der neutrale Drehpunkt des Systems unterhalb der Reflexions-Maßverkörperungsebene zu liegen kommt. Wird dafür gesorgt, dass der neutrale Drehpunkt in der sog. neutralen Faser der Reflexions-Maßverkörperung zu liegen kommt, so lässt sich der negative Einfluss eventueller Verbiegungen der Reflexions-Maßverkörperung vorteilhaft minimieren.

Die beschriebene erste Ausführungsform kann auch dadurch geringfügig abgewandelt werden, indem statt der +1. (-1.) Beugungsordnung der Reflexions-Maßverkörperung jeweils die -1. (+1.) Beugungsordnung verwendet wird. In den oben aufgeführten Dimensionierungsformeln muss in diesem Fall $TP_M$ durch $-TP_M$, $TP_{AG1}$ durch $-TP_{AG1}$ und $TP_{AG2}$ durch $-TP_{AG2}$ ersetzt werden. Der neutrale Drehpunkt liegt in diesem Fall dann oberhalb der Reflexions-Maßverkörperung.

Abwandlung der ersten Ausführungsform

Eine weitere Abwandlung der ersten Ausführungsform der erfindungsgemäßen Positionsmesseinrichtung ist in den Figuren 2a - 2e dargestellt.

Der maßgebliche Unterschied zur vorher erläuterten Variante in den Figuren 1a - 1d besteht hierbei in einer anderen Ausgestaltung des Retroreflektorelements. Das Retroreflektorelement ist nunmehr als Dachkantprisma 618 mit einem Prismenwinkel von 90° ausgebildet, dessen Dachkante 618.1 parallel zur Messrichtung x orientiert ist. Auf der Unterseite des Dachkantprismas 618 sind die Abtastgitter 614.1 - 614.4 als auch das Vereinigungsgitter 614.5 angeordnet, wie aus der Draufsicht auf die Unterseite des Dachkantprismas 618 in Figur 1e ersichtlich. In Bezug auf derartige Retroreflektorelemente sei auch auf die eingangs erwähnte WO 2002/023131 A1 verwiesen.

Ansonsten entspricht der grundsätzlich Abtaststrahlengang demjenigen des Beispiels aus den Figuren 1a - 1 d.

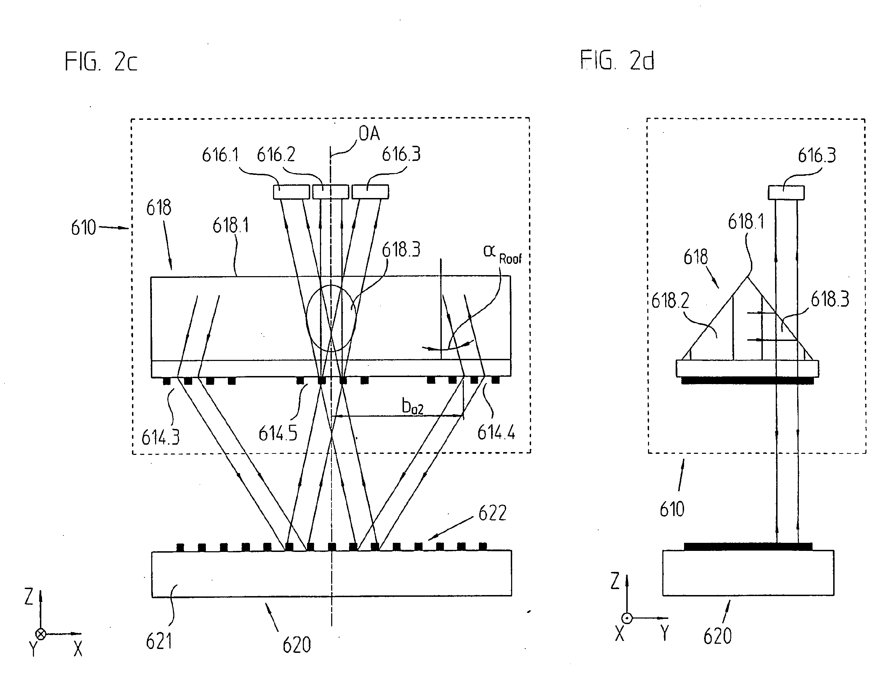

Die Figuren 2a und 2b zeigen in verschiedenen Ansichten den Abtaststrahlengang von der Lichtquelle 611 über die Kollimatoroptik 612, das erste Auftreffen des kollimierten Strahlenbündels auf der Messteilung 622 der Reflexions-Maßverkörperung, der Rückreflexion der gebeugten Teilstrahlenbündel in Richtung der Abtasteinheit 610, das Durchtreten der Abtastgitter 614.1, 614.2 bis etwa zur Mitte des Dachkantprismas 618. In den Figuren 2c und 2d ist in verschiedenen Ansichten der weitere Abtaststrahlengang in Form der Rückumlenkung der Teilstrahlenbündel in Richtung Reflexions-Maßverkörperung 620, das Durchtreten der Abtastgitter 614.3, 614.4, das zweite Auftreffen auf der Reflexions-Maßverkörperung 620, die zweite Rückreflexion in Richtung Abtasteinheit 610, das Durchtreten des Vereinigungsgitters 614.5 und das Propagieren der drei Paare interferierender Teilstrahlenbündel zu den drei Detektorelementen 616.1, 616.2, 616.3 gezeigt.

Wie oben erwähnt, wird in dieser Abwandlung der ersten Ausführungsform der erfindungsgemäßen Positionsmesseinrichtung zur Retroreflexion anstelle der Abtastplatten-Baueinheit mit diffraktiven Zylinderlinsen bzw. diffraktiven Ablenk-/Linsenelementen und planen Reflektorelementen aus den Figuren 1a - 1d nunmehr ein Dachkantprisma 618 in Form eines 90°-Umlenkprismas verwendet; dessen Dachkante 618.1 ist parallel zur Messrichtung x orientiert. Im zentralen Bereich weist das Dachkantprisma 618 zwei Bohrungen 618.2, 618.3 bzw. optisch-unwirksame Durchlassöffnungen auf, durch die das Beleuchtungs-Strahlenbündel zur Reflexions-Maßverkörperung 620 bzw. die rückreflektierten Teilstrahlenbündel zu den Detektorelementen 616.1, 616.2, 616.3 propagieren können. Die Abtastgitter 614.1 - 614.4 sind als periodische Gitter mit geraden Gitterstegen ausgebildet, die nur in Messrichtung x eine Ablenkwirkung auf die verschiedenen Teilstrahlenbündel ausüben.

Diese Variante der ersten Ausführungsform der erfindungsgemäßen Positionsmesseinrichtung erfordert keine derart fein strukturierten Abtastgitter wie das obige Beispiel und ist dann vorteilhaft, wenn die Herstellung derart feiner Gitterstrukturen technologiebedingt zu aufwändig ist oder etwa die Polarisationseigenschaften zu feiner Gitter sich nachteilig auswirken.

Grundsätzlich lassen sich auch nachfolgend noch zu erläuternden Ausführungsformen jeweils mit den beiden vorab beschriebenen Varianten des Retroreflektorelements ausführen. Das heißt, dass in einem Fall das Retroreflektorelement aus diffraktiven Zylinderlinsen, die der in Messrichtung ablenkenden Wirkung der Abtastgitter überlagert wird (diffraktiven Ablenk/Linsenelementen), und den Reflektorelementen auf der Oberseite der Abtastplatte gebildet wird. Im anderen Fall ist das Retroreflektorelement in Form eines 90°-Dachkantprismas mit einer Dachkante parallel zur Messrichtung x ausgebildet.

Zweite Ausführungsform

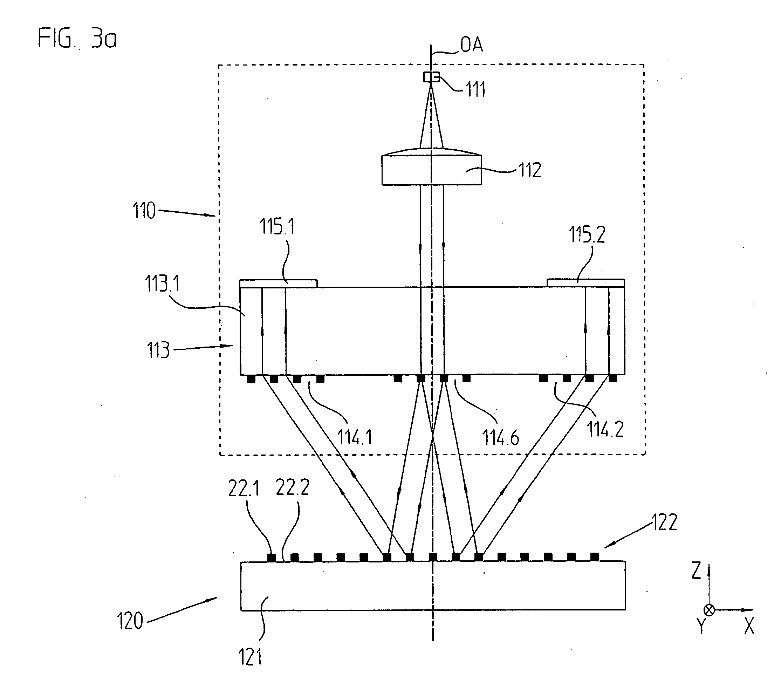

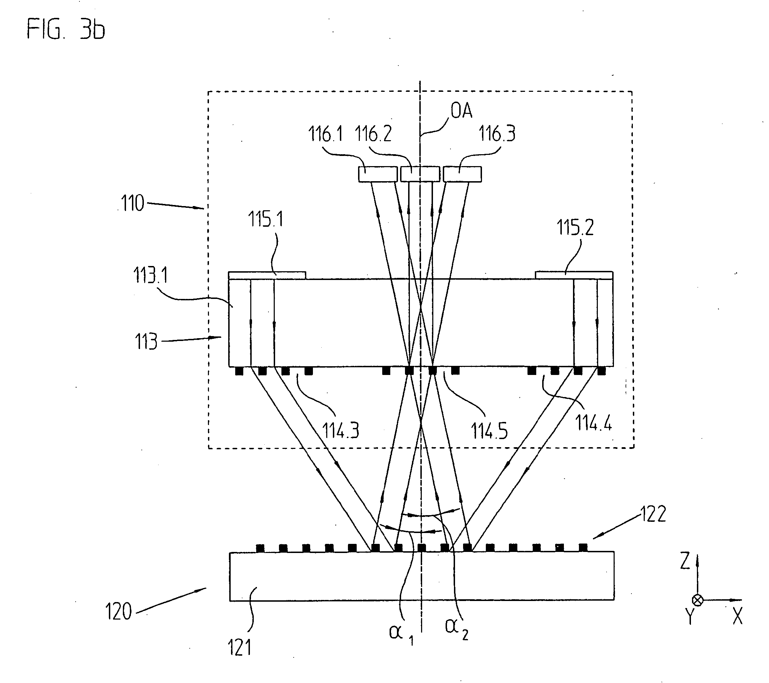

Eine zweite Ausführungsform der erfindungsgemäßen Positionsmesseinrichtung sei nachfolgend anhand der Figuren 3a - 3d erläutert. Prinzipiell zeigen diese Figuren wieder die gleichen Ansichten der Positionsmesseinrichtung wie im obigen Beispiel der Figuren 1a - 1d.

Auch in diesem Beispiel ist über den realisierten Abtaststrahlengang bzw. die Anordnung der verschiedenen optischen Elemente insbesondere in der Abtasteinheit 110 wiederum sichergestellt, dass auf dem Vereinigungsgitter 114.5 vor den Detektorelementen ein Paar von Teilstrahlenbündeln nichtparallel auftrifft und nach dem Vereinigungsgitter 114.5 mehrere Paare kollinearer und interferierender Teilstrahlenbündel in Richtung der Detektorelemente 116.1 - 116.3 propagieren.

Nachfolgend seien nur die wesentlichen Unterschiede zum ersten Ausführungsbeispiel aus Figur 1a - 1d erläutert. So ist ergänzend zum ersten Beispiel vorgesehen, ein Aufspaltgitter 114.6 in Form eines Transmissionsgitters im kollimierten Strahlengang des Strahlenbündels nach der Kollimatoroptik 112 anzuordnen. Das Aufspaltgitter 114.6 besitzt hierbei eine Teilungsperiode $TP_{AG0}$, die der Teilungsperiode $TP_{VG}$ des im Abtaststrahlengang nachfolgend angeordneten Vereinigungsgitters 114.5 entspricht, d.h. $TP_{AG0} = TP_{VG}$. Über das Aufspaltgitter 114.6 erfolgt eine Aufspaltung des Strahlenbündels in zwei gebeugte Teilstrahlenbündel, die dann in Richtung der Reflexions-Maßverkörperung 120 propagieren. Auf der Reflexions-Maßverkörperung 120 treffen die beiden Teilstrahlenbündel in dieser Variante an unterschiedlichen Orten auf die Messteilung 122 auf, wo dann wiederum jeweils eine Aufspaltung in weitere Teilstrahlenbündel erfolgt, die in Richtung der Abtasteinheit 110 zurückreflektiert werden. Die zurückreflektierten Teilstrahlenbündel, die an der Reflexions-Maßverkörperung 120 in +1. und -1. Beugungsordnungen abgelenkt werden, treffen auf die Abtastgitter 114.1, 114.2. Diese lenken die Teilstrahlenbündel in Messrichtung x jeweils so ab, dass sie in dieser x-Richtung parallel zur optischen Achse OA verlaufen. In y-Richtung wirken die Abtastgitter 114.1, 114.2 gemäß der obigen Ausführungsform in Fig. 1a - 1d wie diffraktive Zylinderlinsen, die die Teilstrahlenbündel wiederum auf die Reflektorelemente 115.1, 115.2 fokussieren. Nachfolgend kollimieren die Abtastgitter 114.3, 114.4 die Teilstrahlenbündel in y-Richtung und lenken sie in Messrichtung x geneigt auf die Reflexions-Maßverkörperung 120. Die Abtastgitter fungieren demzufolge als diffraktive Ablenk-/Linsenelemente. Der nachfolgende Strahlengangverlauf entspricht demjenigen des Ausführungsbeispiels aus Fig. 1a - 1d.

Über das Einbringen des Aufspaltgitters 114.6 in den Abtaststrahlengang wird in diesem zweiten Ausführungsbeispiel gewährleistet, dass die auf das Vereinigungsgitter 114.5 einfallenden Teilstrahlenbündel am gleichen Punkt auf dieses -gitter 114.5 auftreffen. Im Gegensatz zum ersten Ausführungsbeispiel gilt dies für alle Abtastabstände zwischen Reflexions-Maßverkörperung 120 und Abtasteinheit 110. Diese Ausführungsform der erfindungsgemäßen Positionsmesseinrichtung liefert daher stabilere Ausgangssignale, die auch unabhängig von Schwankungen der genutzten Lichtwellenlänge sind.

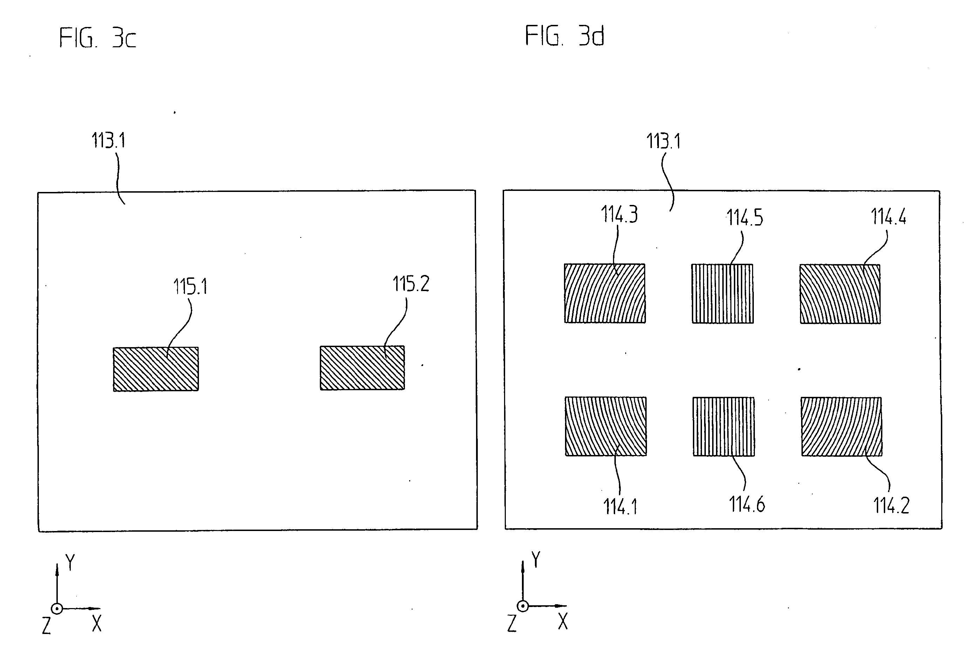

Die Retroreflektorfunktionalität wird in der Abtasteinheit 110 wie im Beispiel der Figuren 1a - 1d über die Baueinheit mit der Abtastplatte 113 realisiert. Auf dessen Unterseite, die der Reflexions-Maßverkörperung zugewandt ist, sind wie in Figur 3d ersichtlich die Abtastgitter 114.1 - 114.4, das Vereinigungsgitter 114.5 sowie das Aufspaltgitter 114.6 angeordnet. Auf der Oberseite der Abtastplatte 113 sind gemäß der Draufsicht in Figur 3c die beiden planen Reflektorelemente 115.1, 115.2 angeordnet.

Die Teilungsperioden $TP_{AG1}$ der Abtastgitter 114.1, 114.2 sowie die Teilungsperioden $TP_{AG2}$ der Abtastgitter 114.3, 114.4 werden in diesem Beispiel vorzugsweise nach folgender Gleichung (2.1) bestimmt:

$$\frac{1}{TP_{AG1}} = \frac{1}{TP_{AG2}} = \frac{1}{TP_M} + \frac{1}{TP_{VG}} \qquad\qquad \text{(Gl. 2.1)}$$

mit:

TP$_M$ := Teilungsperiode der Messteilung
TP$_{VG}$ := Teilungsperiode des Vereinigungsgitters.

Ähnlich wie im ersten Beispiel ergibt sich auch in dieser Ausführungsform die Lage des neutralen Drehpunkts unterhalb der Reflexions-Maßverkörperungsebene. Wiederum kann eine Modifikation dieser Ausführungsform durch Ersetzen von TP$_M$ durch - TP$_M$, TP$_{AG1}$ durch -TP$_{AG1}$ sowie von TP$_{AG2}$ durch -TP$_{AG2}$ beschrieben werden, wobei der neutrale Drehpunkt dann oberhalb der Reflexions-Maßverkörperung 120 zu liegen kommt.

Erste Abwandlung der zweiten Ausführungsform

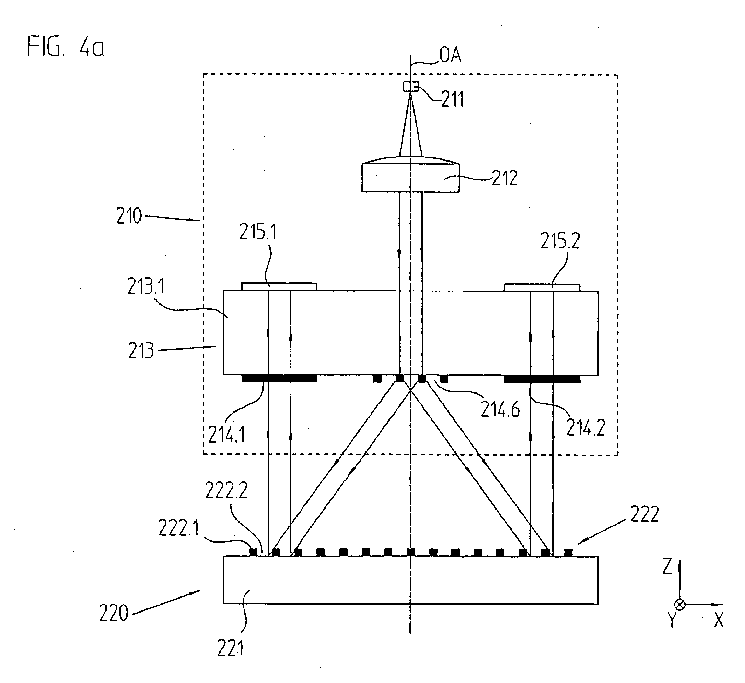

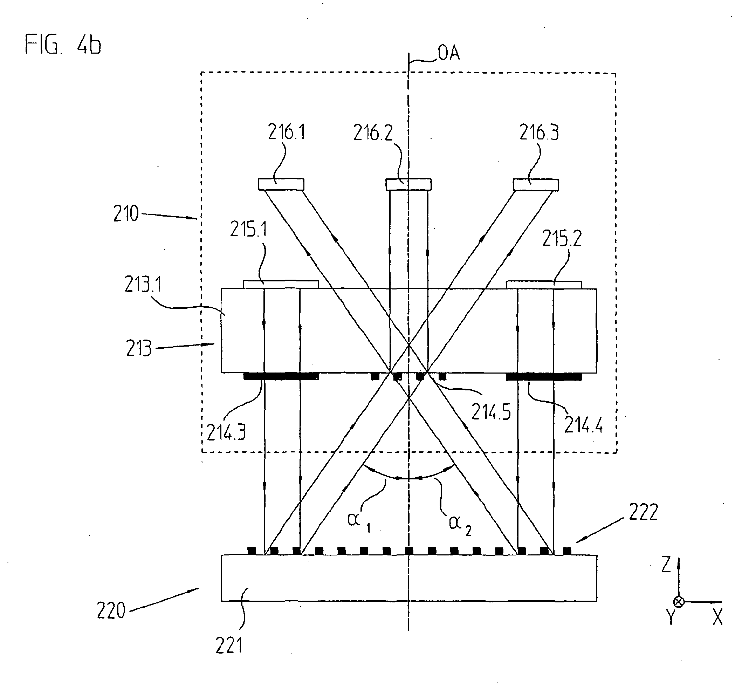

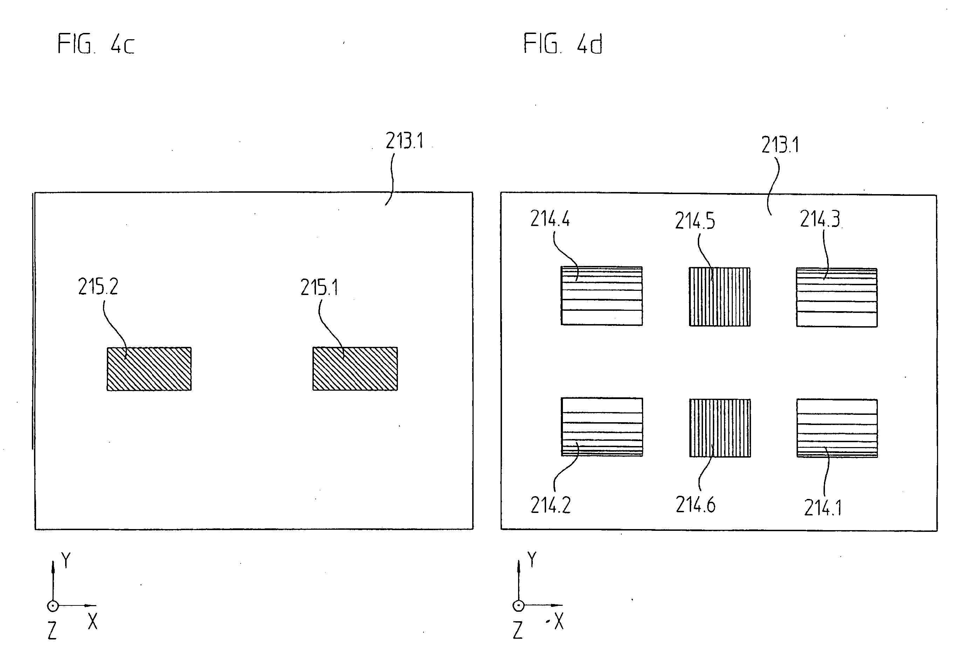

Eine erste Abwandlung der zweiten Ausführungsform sei nachfolgend anhand der Figuren 4a - 4d erläutert. Diese Figuren zeigen wieder die gleichen Ansichten der Positionsmesseinrichtung wie im obigen zweiten Ausführungsbeispiel.
Bezüglich des prinzipiellen Abtaststrahlengangs entspricht diese Variante dem vorherigen Beispiel mit dem Aufspaltgitter 214.5 nach der Kollimatoroptik 212. Dessen Teilungsperioden TP$_{AG0}$ wird in diesem Beispiel gemäß folgender Beziehung (3.1) gewählt:

$$\text{TP}_{AG0} = \text{TP}_{VG} = \text{TP}_M \qquad\qquad \text{(Gl. 3.1)}$$

mit:

TP$_{VG}$ Teilungsperiode des Vereinigungsgitters
TP$_M$ := Teilungsperiode der Reflexions-Maßverkörperung

Die vorliegende Variante stellt einen Spezialfall der zweiten Ausführungsform dar, mit 1/TP$_{AG1}$ = 1/ TP$_{AG2}$ = 0. Das heißt, die entsprechende Struktur auf der Abtastplatte 213 lenkt nicht mehr in Messrichtung x ab und ist damit als reine Fresnel-Zylinderlinse in y-Richtung ausgebildet.
Die Abtastgitter 214.1 - 214.4 auf der Unterseite der Abtastplatte 213 sind somit in dieser Variante im Unterschied zum vorherigen Beispiel als Fresnel-Zylinderlinsen in y-Richtung ausgebildet, d.h. nicht als Gitter-Zylinderlinsen-Strukturen wie in den Figuren 3a - 3d; hierzu sei insbesondere auf die Figur 4d verwiesen, die die Unterseite der Abtastplatte 313 mit den dort angeordneten Elementen zeigt.
Alternativ hierzu ist auch eine Ausbildung der Abtastgitter 214.1 - 214.4 als geblazte Fresnel-Zylinderlinsen oder als off-axis-Fresnellinsen möglich.
Aufgrund dieser Ausbildung der Abtastgitter 214.1 - 214.4 in der Abtasteinheit 210 resultiert im dargestellten Beispiel ein geringfügig anderer Abtaststrahlengang als im vorherigen Beispiel der Figuren 3a - 3d. So werden die erstmalig auf die Reflexions-Maßverkörperung 220 auftreffenden Teilstrahlenbündel bzw. die zur Signalerzeugung genutzten Beugungsordnungen wie in Figur 4a ersichtlich nunmehr senkrecht zurück zur Abtasteinheit 210 zurückreflektiert.
Als Konsequenz aus diesem anderen Abtaststrahlengang ergibt sich bei diesem Beispiel eine andere Lage des neutralen Drehpunktes. So liegt dieser im Unterschied zur vorher beschriebenen Variante etwa in der Höhe des doppelten Abtastabstands über der Reflexions-Maßverkörperungsebene. Für bestimmte Applikationen der erfindungs-gemäßen Positionsmesseinrichtung resultieren damit flexible Möglichkeiten, durch die gezielte Auslegung des Abtaststrahlengangs die Lage des neutralen Drehpunkts an die gewünschte Stelle zu legen.
Darüberhinaus entspricht der Abtaststrahlengang dieses Beispiels grundsätzlich demjenigen aus den Figuren 3a - 3d.
Ersetzt man in einer weiteren Modifikation dieser Variante die Kombination aus Fresnel-Zylinderlinsen 214.1 - 214.4 und Reflektorelemente 215.1, 215.2 durch ein Dachkantprisma analog zum Beispiel in den Fig. 2a - 2d, so können die Abtastgitter 214.1 - 214.4 vollständig entfallen, da weder eine ablenkende Wirkung in Messrichtung x noch eine Linsenswirkung in y-Richtung benötigt wird. Die geringe Anzahl durchlaufener Gitter hat eine besonders hohe Signalstärke einer entsprechenden Positionsmesseinrichtung zur Folge.

Zweite Abwandlung der zweiten Ausführungsform

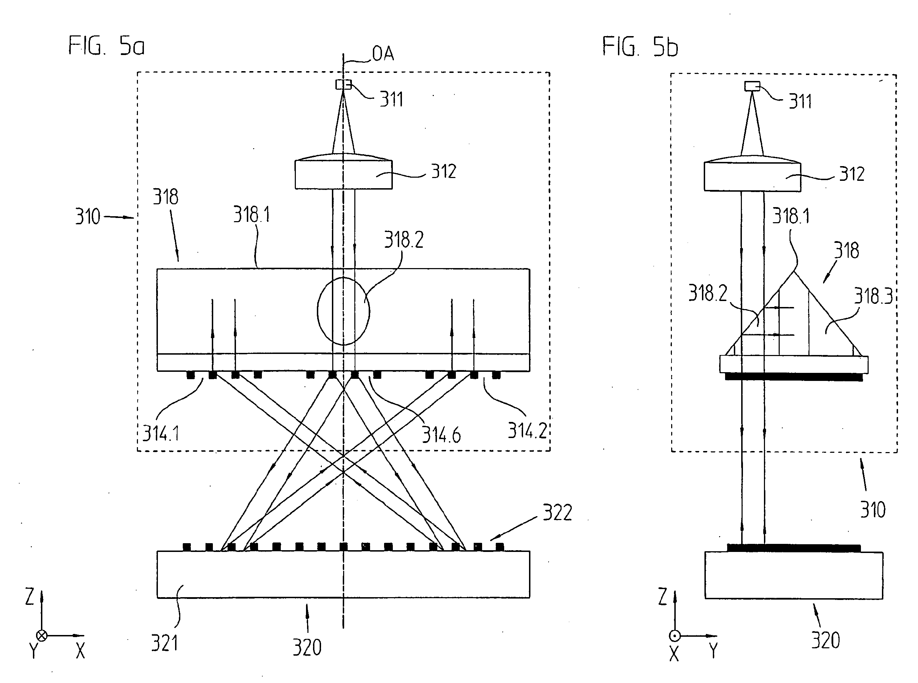

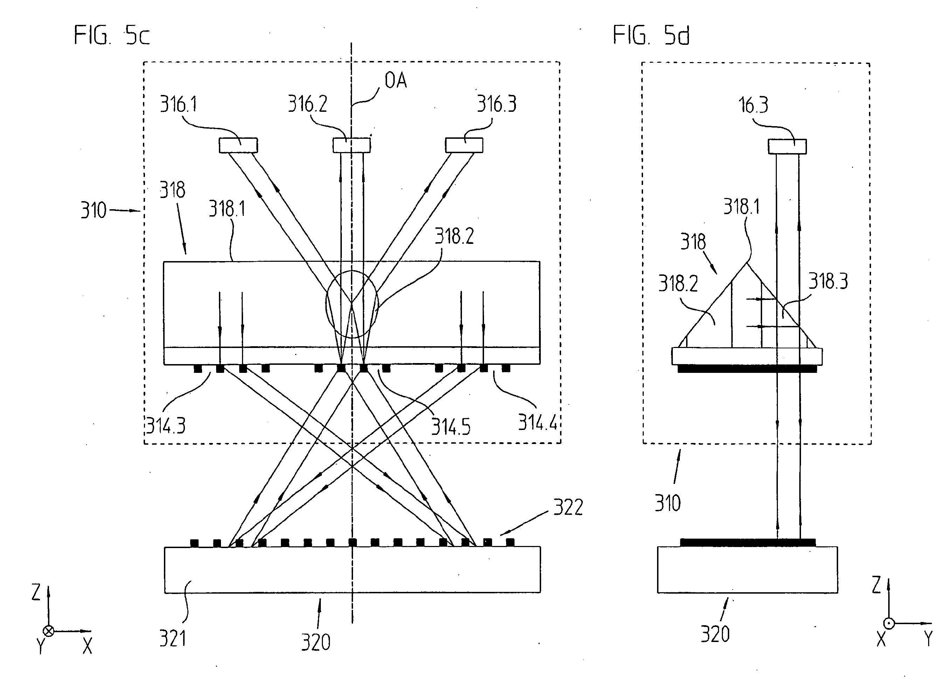

Eine zweite Abwandlung der zweiten Ausführungsform der erfindungsgemäßen Positionsmesseinrichtung ist in den Figuren 5a - 5e dargestellt. Diese Figuren zeigen wieder die gleichen Ansichten der Positionsmesseinrichtung wie im obigen Beispiel der Figuren 2a - 2e.

Die Variante aus den Figuren 5a - 5e unterscheidet sich zum einen von den beiden vorherigen Beispielen in der Wahl der Teilungsperioden des Aufspaltgitters und der Teilungsperiode $TP_M$ der Reflexions-Maßverkörperung 320. Insbesondere die Teilungsperiode $TP_M$ der Reflexions-Maßverkörperung 320 ist dergestalt gewählt, dass die erstmalig auf die Reflexions-Maßverkörperung 320 auftreffenden Teilstrahlenbündel so zur Abtasteinheit 310 zurück umgelenkt werden, dass sich die von verschiedenen Orten in Beugung zurückreflektierten Teilstrahlenbündel kreuzen, bevor dieser auf die ersten Abtastgitter 314.1, 314.2 im Abtaststrahlengang auftreffen.

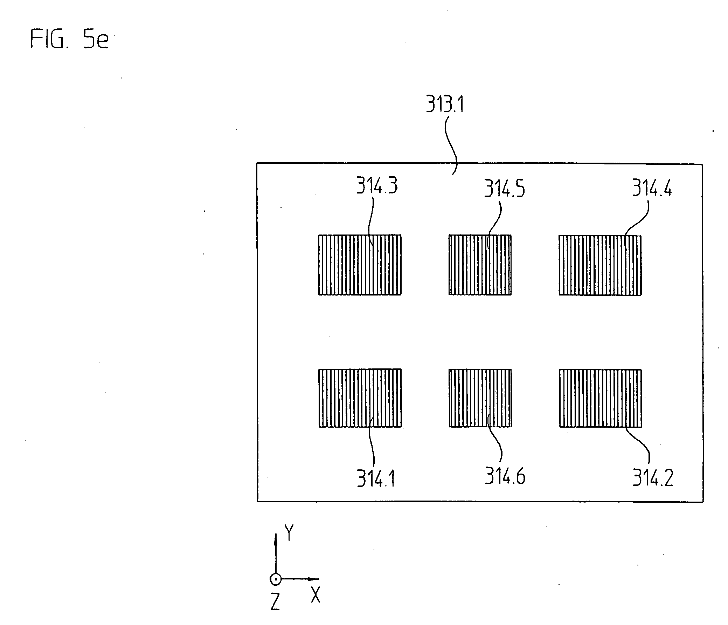

Zum anderen ist in dieser Variante vorgesehen, zur Umsetzung der Retroreflektorfunktionalität in der Abtasteinheit 310 wiederum ein Dachkantprisma 318 anzuordnen und nicht die Ausgestaltung wie vorher beschrieben zu nutzen. Wie bereits im Beispiel der Figuren 2a - 2e ist die Dachkante 318.1 des Dachkantprismas 318 parallel zur Messrichtung x angeordnet. Das Dachkantprisma 318 weist ebenfalls zwei Bohrungen 318.2, 318.3 bzw. optisch-unwirksame Durchlassöffnungen auf, durch die das Beleuchtungs-Strahlenbündel zur Reflexions-Maßverkörperung 320 bzw. zu den Detektorelementen 316.1, 316.2, 316.3 propagieren kann. Auf der Unterseite des Dachkantprismas 318 sind gemäß der Darstellung in Figur 5e die verschiedenen Abtastgitter 314.1 - 314.4 sowie das Aufspaltgitter 314.6 und das Vereinigungsgitter 314.5 angeordnet.

Ansonsten verläuft der prinzipielle Abtaststrahlengang dieser Variante analog zu den Abtaststrahlengängen des zweiten Ausführungsbeispiels.

Diese zweite Abwandlung der zweiten Ausführungsform ist insbesondere für sehr kleine Teilungsperioden $TP_M$ auf Seiten der Reflexions-Maßverkörperung vorteilhaft. Durch die in Messrichtung x schräge Beleuchtung der Messteilung können auch Reflexions-Maßverkörperungen abgetastet werden, deren Teilungsperioden $TP_M$ kleiner als die Wellenlänge $\lambda$ der verwendeten Lichtquelle ist. Die theoretisch minimal abtastbare Teilungsperiode $TP_M$ entsprich hierbei $\lambda/2$.

Abschließend seien auch in Bezug auf diese Variante noch einige Dimensionierungsregeln kurz erläutert.

Werden in der oben aufgeführten Gleichung (2.1) $TP_M$ durch - $TP_M$, $TP_{AG1}$ durch -$TP_{AG1}$ sowie $TP_{AG2}$ durch -$TP_{AG2}$ ersetzt, so gilt hier für die verschiedenen Teilungen:

$$\frac{1}{TP_{AG1}} = \frac{1}{TP_{AG2}} = \frac{1}{TP_M} - \frac{1}{TP_{VG}} \qquad \text{(Gl. 4.1)}$$

mit:

$TP_M$ := Teilungsperiode der Messteilung
$TP_{VG}$ := Teilungsperiode des Vereinigungsgitters.

Damit eine Strahltrennung derjenigen Strahlenbündel möglich ist, die einerseits das Aufspaltgitter 314.6 durchtreten und andererseits von der Reflexions-Maßverkörperung 320 in Richtung Abtastplatte zurücklaufen, muss die nachfolgende Bedingung (4.2) eingehalten werden:

$$TP_{AG1} > 2 * T_{PM} \qquad \text{(Gl. 4.2)}$$

Geeignet gewählte Werte sind beispielsweise $T_{PM}$ = 0.5$\mu$m, $TP_{AG1}$ = $TP_{AG2}$ = 1.3$\mu$m bei einer Wellenlänge $\lambda$ = 670nm.

Dritte Ausführungsform

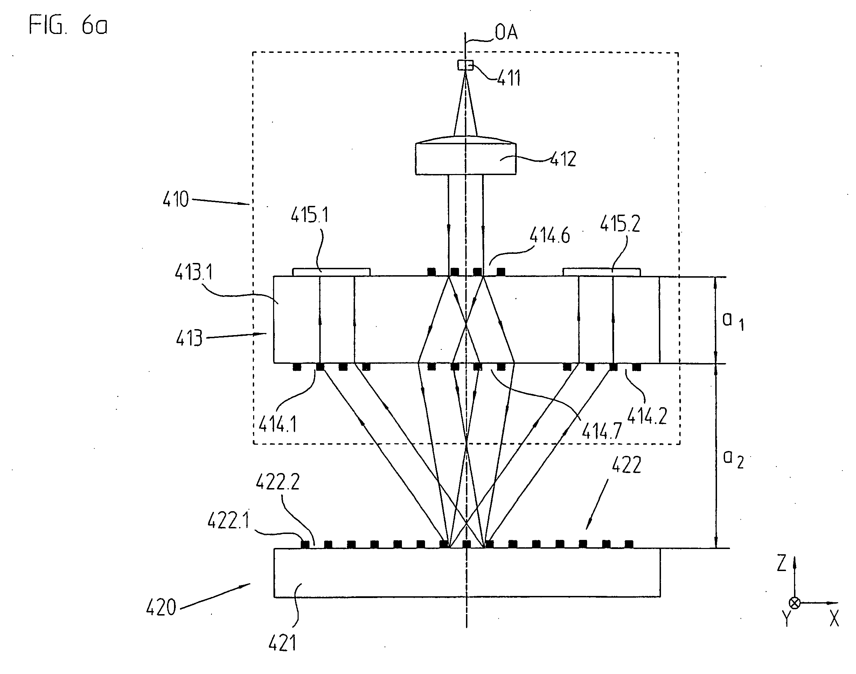

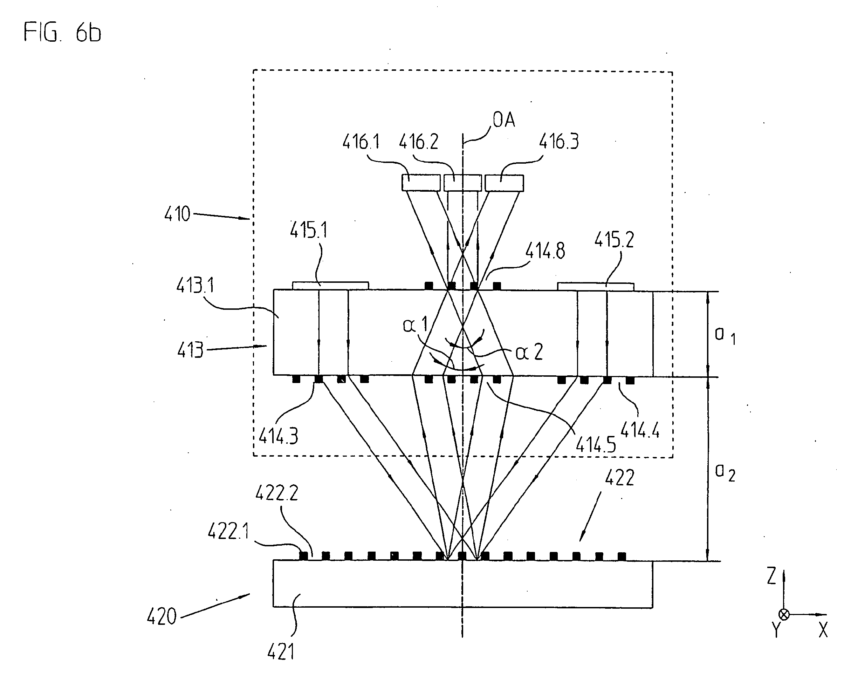

Eine dritte Ausführungsform der erfindungsgemäßen Positionsmesseinrichtung ist in den Figuren 6a - 6d gezeigt. Die Darstellung entspricht wiederum denjenigen der vorher erläuterten Varianten der Figuren 1a -1d, 3a - 3d und 4a - 4d. Nachfolgend sei i.w. nur auf die maßgeblichen Unterschiede zu diesen Beispielen eingegangen.

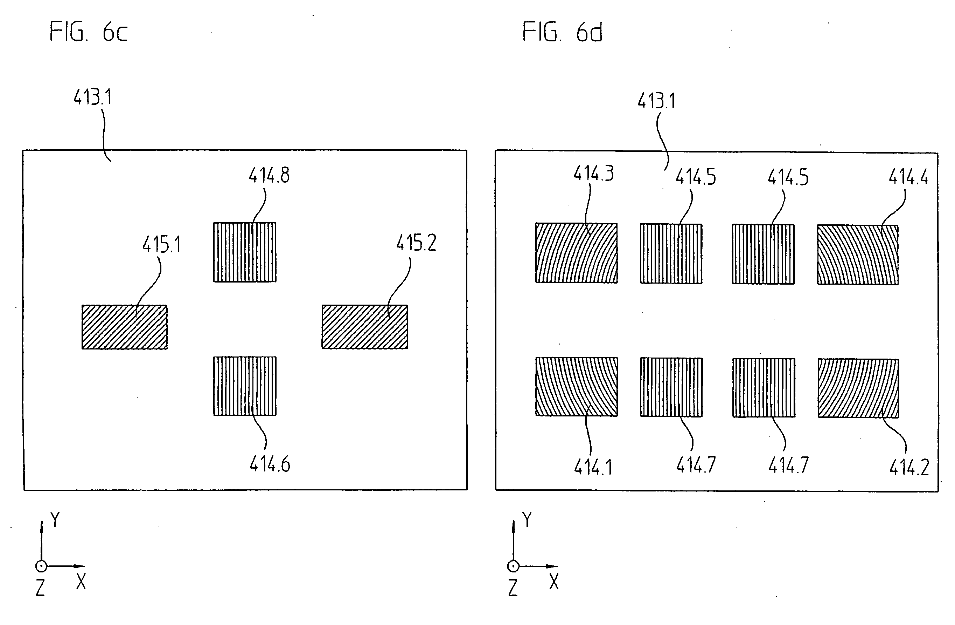

So ist nunmehr vorgesehen, dass das nach der Kollimatoroptik 412 parallele Strahlenbündel auf ein Aufspaltgitter 414.6 auf der Oberseite der Abtastplatte 413 auftrifft und dort in zwei Teilstrahlenbündel aufgespalten wird. Die beiden Teilstrahlenbündel gelangen anschließend auf ein Aufspalt-Hilfsgitter 414.7 auf der Unterseite der Abtastplatte 413. Über das Aufspalt-Hilfsgitter 414.7 wird sichergestellt, dass die beiden aufgespaltenen Teilstrahlenbündel am gleichen Auftreffort auf die Reflexions-Maßverkörperung 420 auftreffen. Wie aus der Ansicht in Figur 6d ersichtlich ist, kann das Aufspalt-Hilfsgitter 414.7 auch aus zwei separaten Gitterstrukturen bestehen.

Nach der erstmaligen Rückreflexion von der Reflexions-Maßverkörperung 420 gelangen die Teilstrahlenbündel wie in den vorherigen Beispielen zunächst auf die Abtastgitter 414.1, 414.2, werden dann von den Reflektorelementen 415.1, 415.2 wieder in Richtung der Reflexions-Maßverkörperung umgelenkt und durchtreten die Abtastgitter 414.3, 414.4, bevor die Teilstrahlenbündel ein zweites Mal am gleichen Ort auf die Reflexions-Maßverkörperung 420 auftreffen. Von dort erfolgt wiederum die Rückreflexion in Richtung der Abtasteinheit 410. In der Abtasteinheit treffen nunmehr Teilstrahlenbündel unter symmetrischen Winkeln auseinanderlaufend auf ein Vereinigungs-Hilfsgitter 414.5 auf der Unterseite der Abtastplatte; auch das Vereinigungs-Hilfsgitter 424.5 kann wie aus Figur 6c ersichtlich, aus zwei separaten Gitterstrukturen bestehen. Das Vereinigungs-Hilfsgitter 414.5 stellt sicher, dass die Teilstrahlenbündel unter den symmetrischen Winkeln α1 = α2 wieder zusammenlaufend auf das Vereinigungsgitter 414.8 auftreffen, bevor drei Paare interferierender Teilstrahlenbündel in Richtung der Detektorelemente 416.1, 416.2, 416.3 propagieren.

In diesem Beispiel ist demzufolge sichergestellt, dass die zunächst über das Aufspaltgitter 414.6 aufgespaltenen Teilstrahlenbündel am gleichen Ort auf die Reflexions-Maßverkörperung 420 bzw. die Messteilung 422 auftreffen. Dies ist insbesondere bei lokalen Verschmutzungen von Bedeutung, die dann alle Signalanteile gleichmäßig beeinflussen.

Im Hinblick auf die Dimensionierung der verschiedenen Gitter ergeben sich in diesem Beispiel die nachfolgenden, einzuhaltenden Bedingungen:

$$a_1 \cdot Tan(ArcSin(\lambda/(n_A \cdot TP_{AG}))) = a_2 \cdot Tan(ArcSin(\lambda/TP_{AHG})) \qquad (\text{Gl. 5.1})$$

mit:

a1 := Abstand zwischen den Gitterebenen der Abtastplatte
a2 := Abtastabstand zwischen Reflexions-Maßverkörperung und Abtasteinheit
$n_A$ := Brechungsindex der Abtastplatte
$TP_{AG}$ := Teilungsperiode des Aufspaltgitters 414.6
$TP_{AHG}$ := Teilungsperiode des Aufspalt-Hilfsgitters 414.7

Weiterhin muss im Fall dieses Ausführungsbeispiels gelten:

$$\frac{1}{TP_{AG1}} \doteq \frac{1}{TP_M} + \frac{1}{TP_{AHG}} - \frac{1}{TP_{AG}} \qquad (\text{Gl. 5.2})$$

$$TP_{VG} = TP_{AG} \qquad (\text{Gl. 5.3a})$$

$$TP_{AHG} = TP_{VHG} \qquad (\text{Gl. 5.3b})$$

mit:

$TP_{AG}$ := Teilungsperiode des Aufspaltgitters
$TP_{AHG}$ := Teilungsperiode des Aufspalt-Hilfsgitters
$TP_{AG1}$ := Teilungsperiode des Abtastgitters 414.2
$TP_M$ := Teilungsperiode der Reflexions-Maßverkörperung
$TP_{VG}$ := Teilungsperiode des Vereinigungsgitters
$TP_{VHG}$ := Teilungsperiode des Vereinigungs-Hilfsgitters

Wenn in diesem Beispiel die oben erwähnten Dimensionierungsregeln eingehalten werden, liegt der neutrale Drehpunkt des Systems in der Ebene der Reflexions-Maßverkörperung 420.

Die Gesamt-Effizienz einer Positionsmesseinrichtung basierend auf diesem Beispiel kann durch den Einsatz geblazter Gitter für das Aufspalt-Hilfsgitter 414.7 und das Vereinigungs-Hilfsgitter 414.5 verbessert werden, die auf die Effizienz der genutzten ersten Beugungsordnung optimiert sind. Der gleiche Effekt kann auch durch in y-Richtung schräge Beleuchtung erreicht werden. Das Aufspalt-Hilfsgitter 414.7 und das Vereinigungs-Hilfsgitter 414.5 werden dann so ausgebildet, dass die Reflexions-Maßverkörperung 420 in y-Richtung senkrecht beleuchtet wird.

Vierte Ausführungsform

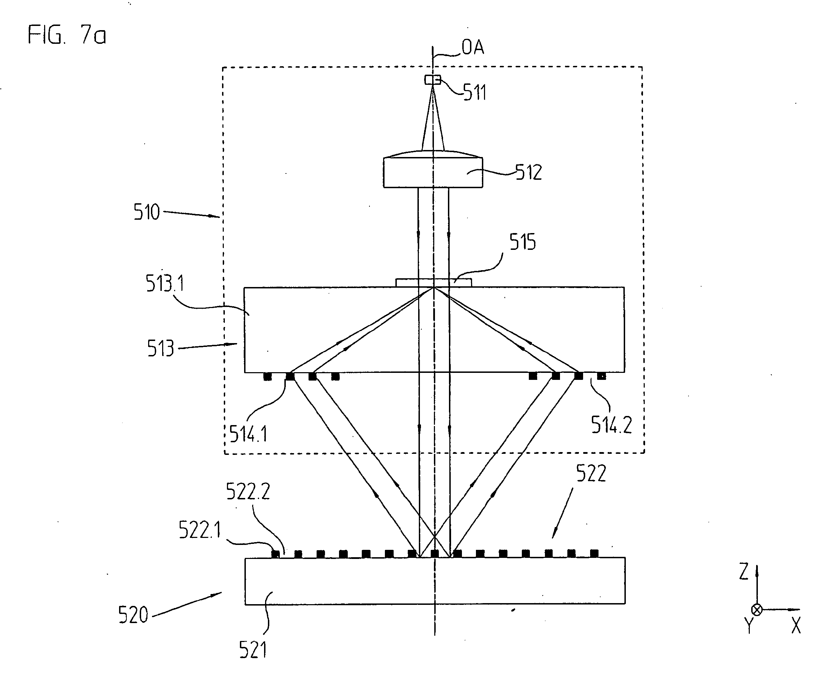

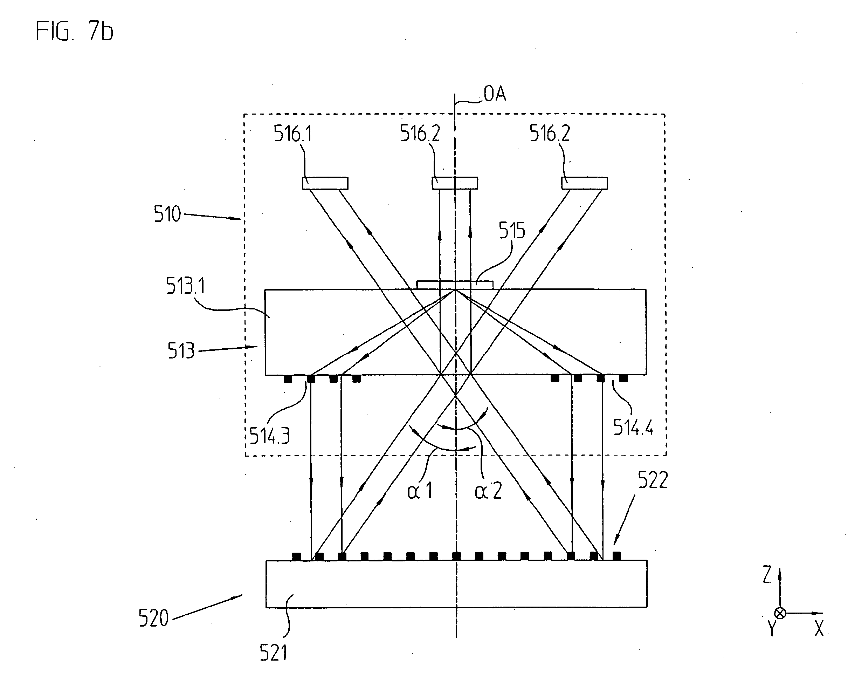

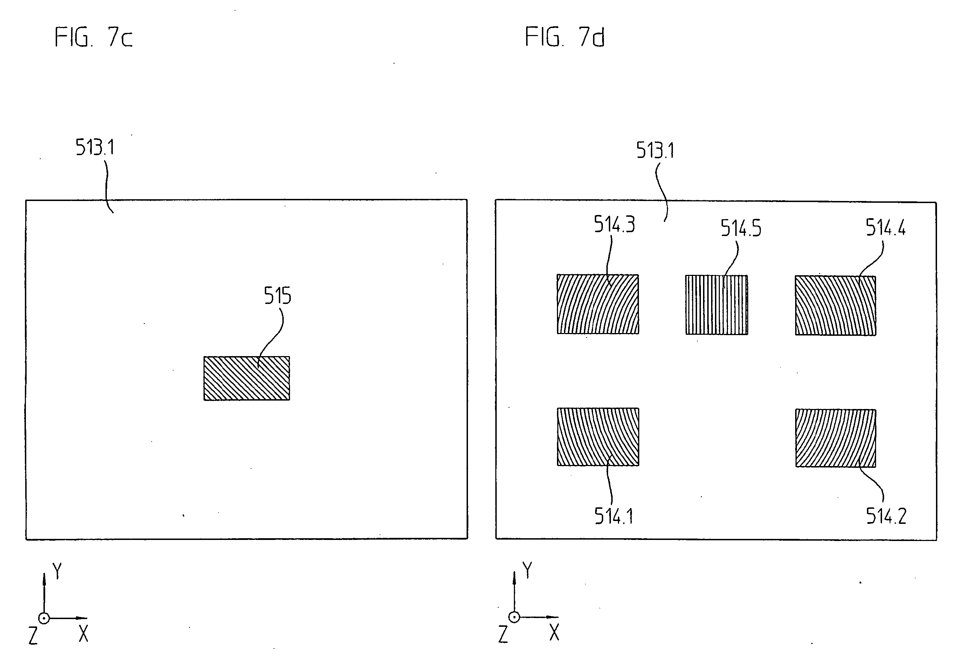

Nachfolgend sei anhand der Figuren 7a - 7d ein viertes Ausführungsbeispiel der erfindungsgemäßen Positionsmesseinrichtung erläutert.

Von der Anzahl der genutzten Gitter im Abtaststrahlengang zwischen Lichtquelle 511 und Detektorelementen 516.1 - 516.3 entspricht dieses Variante derjenigen aus den Figuren 1a - 1d, d.h. dem ersten erläuterten Ausführungsbeispiel. Im Unterschied hierzu sind allerdings die Abtastgitter 514.1 - 514.4 dergestalt ausgebildet, dass darüber eine Punkt-Fokussierung der von der Reflexions-Maßverkörperung 520 kommenden Teilstrahlenbündel auf das einzige vorgesehene Reflektorelement 515 auf der Oberseite der Abtastplatte 513 erfolgt. Ansonsten entspricht der grundsätzliche Abtaststrahlengang demjenigen des ersten Beispiels.

In Bezug auf die Teilungsperioden der verschiedenen Gitter im Abtaststrahlengang ist bei diesem Beispiel folgende Bedingung zu beachten:

$$TP_{VG} = TP_M \qquad (Gl. 6)$$

mit:

$TP_{VG}$ := Teilungsperiode des Vereinigungsgitters
$TP_M$ := Teilungsperiode der Reflexions-Maßverkörperung

Die Abtastgitter 514.1, 514.2 stellen wiederum ein Ablenkgitter kombiniert mit einer diffraktiven Linse dar. In dieser Ausführungsform ist diese diffraktive Linse als zylinder-symmetrische Linse zentriert auf der optischen Achse OA der Abtastoptik ausgebildet. Sie fokussiert die Teilstrahlenbündel auf das Reflektorelement 515 auf der Oberseite der Abtastplatte 513. Das überlagerte Ablenkgitter lenkt mit einer effektiven Teilungsperiode $TP_{AG1} = TP_M$ ab.

Die Abtastgitter 514.3, 514.4 sind ausschließlich als zylindersymmetrische diffraktive Linsen zentriert auf der optischen Achse OA der Abtastoptik ausgebildet. Sie üben keine zusätzlich überlagerte ablenkende Wirkung aus (1/$TP_{AG2}$ = 0), sondern kollimieren die auf der Oberseite der Abtastplatte 513 fokussierten Teilstrahlenbündel.

Der neutrale Drehpunkt liegt bei Einhaltung dieser Bedingungen im vorliegenden Beispiel etwa in Höhe der Abtastgitter oberhalb der Reflexions-Maßverkörperung.

Fünfte Ausführungsform

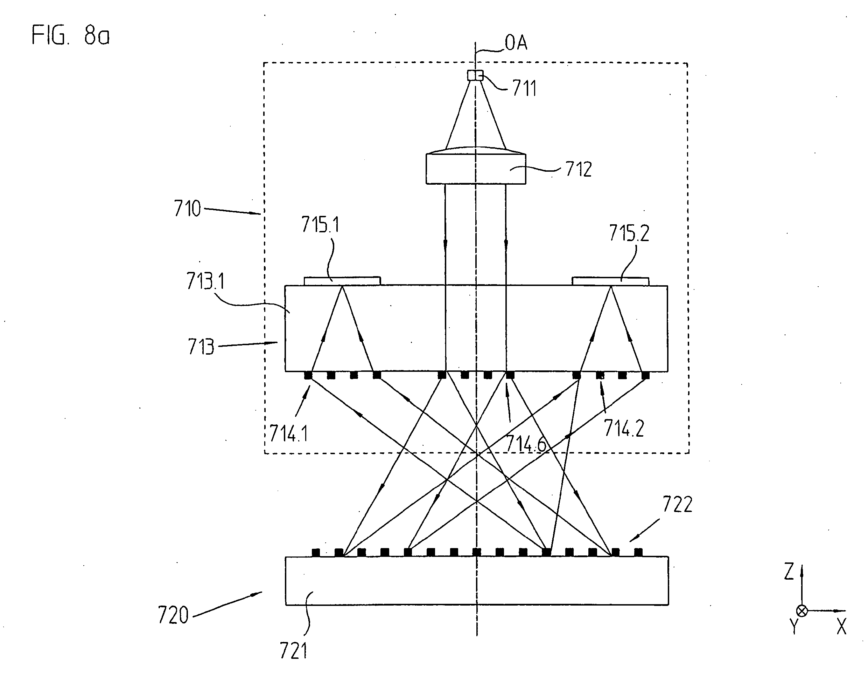

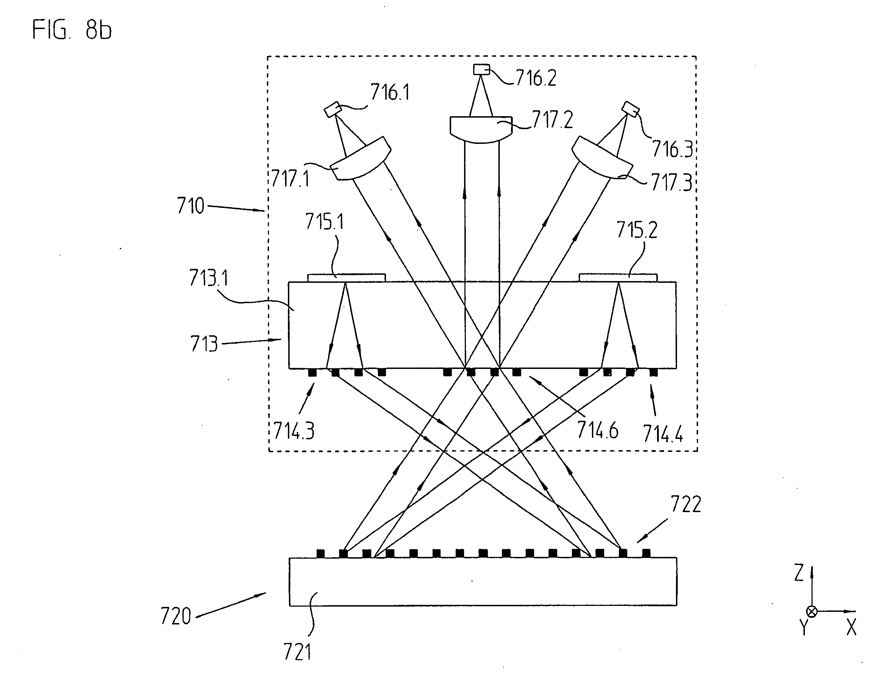

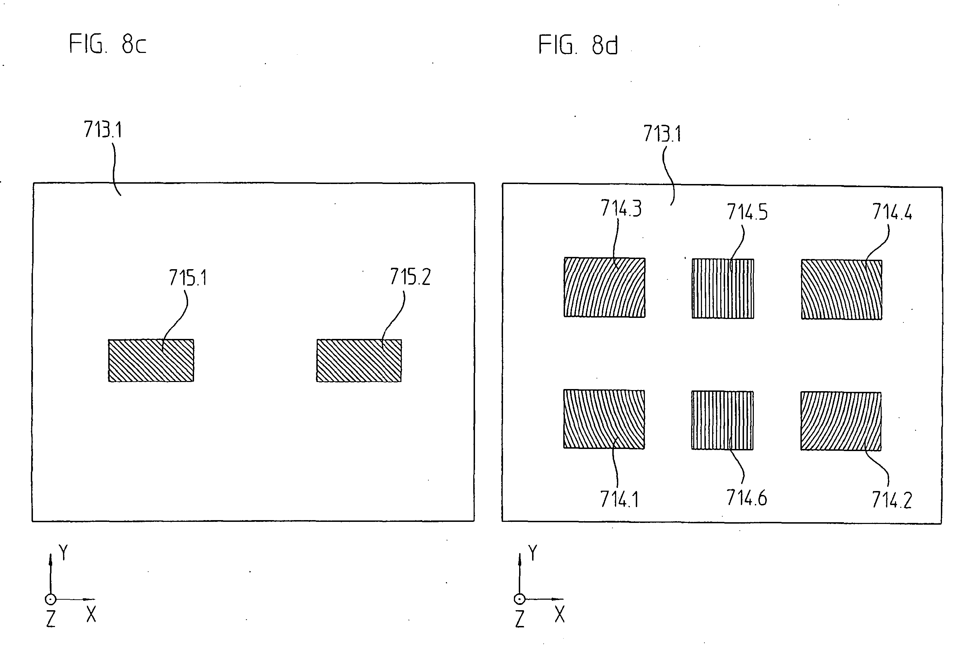

Eine fünfte Ausführungsform der erfindungsgemäßen Positionsmesseinrichtung ist in den Figuren 8a - 8d gezeigt. Die Darstellung entspricht wiederum denjenigen der vorher erläuterten Varianten. Nachfolgend sei wiederum nur auf die maßgeblichen Unterschiede zu den vorhergehenden Beispielen eingegangen.

Die dargestellte fünfte Ausführungsform entspricht weitgehend der vorher erläuterten dritten Ausführungsform, die anhand der Figuren 5a - 5d erläutert wurde. Im Unterschied zur dritten Ausführungsform wurde das als Retroreflektorelement vorgesehene Dachkantprisma durch kombinierte Ablenk-/Linsenelemente 714.1 - 714.4 ersetzt, die zudem anstelle von Zylinderlinsenelementen normale Linsenelemente aufweisen. Die einfallenden Teilstrahlenbündel werden dadurch sowohl in Strichrichtung y der Reflexions-Maßverkörperung 720 als auch in Messrichtung x auf die Reflektorelemente 715.1, 715.2 fokussiert bzw. nach der Reflexion wieder kollimiert. Dies bewirkt eine vollständige Richtungsumkehr der einfallenden Teilstrahlenbündel. Diese vollständige Richtungsumkehr hat zur Folge, dass nach der zweiten Reflexion an der Reflexions-Maßverkörperung 720 die Strahlrichtungen der beiden Teilstrahlenbündel nicht mehr von einer eventuellen Verkippung der Reflexions-Maßverkörperung 720 abhängen. Dies lässt sich vorteilhaft ausnutzen, wenn die nach dem Vereinigungsgitter austretenden Teilstrahlenbündel durch Linsen 717.1, 717.2, 717.3 auf kleine Detektorelemente 716.1, 716.2, 716.3 fokussiert werden. Der Auftreffort auf den Detektorelementen 716.1, 716.2, 716.3 bleibt auch bei einer eventuellen Verkippung der Reflexions-Maßverkörperung 720 stabil. Es lassen sich deshalb besonders kleine und damit schnell ansprechende Detektorelemente 716.1, 716.2, 716.3 verwenden, ferner können zur Detektion auch optische Fasern verwendet werden.

Neben den erläuterten Beispielen resultieren im Rahmen der vorliegenden Erfindung selbstverständlich weitere Ausführungsmöglichkeiten.

So ist es etwa möglich verschiedene Lichtquellen wie LEDs oder Laser mit transversaler Monomode- oder Multimodestruktur einzusetzen. Transversal multimodige, vertikal-emittierende Laserdioden (VCSEL) oder LEDs sind besonders vorteilhaft, da damit eine störende Speckle-Bildung vermieden werden kann. Da bei allen Ausführungsformen vorteilhafterweise die Auftrefforte der beiden einfallenden Teilstrahlenbündel am Vereinigungsgitter zusammentreffen, ergibt sich auch bei einer transversal multimodigen Lichtquelle eine hohe Signalmodulation.

Statt des Vereinigungsgitters und der Photoelemente für die einzelnen, austretenden, resultierenden Beugungsordnungen können auch sog. strukturierte Detektoranordnungen eingesetzt werden. Strukturierte Detektoranordnungen sind z.B. aus der DE 100 22 619 A1 bekannt und bestehen aus parallel angeordneten, streifenförmigen Photodetektoren, wobei jeweils jeder N-te Photodetektor elektrisch verbunden ist. Eine solche strukturierte Detektoranordnung liefert N Signale, die um 360°/N zueinander phasenverschoben sind, N ist vorzugsweise 3 oder 4.

Die in allen Ausführungsbeispielen unter einem Winkel zusammenlaufenden Teilstrahlenbündel interferieren am Ort des Vereinigungsgitters und bilden ein Streifensystem aus, dessen Streifenperiode der halben Teilungsperiode des Vereinigungsgitters entspricht. Durch eine geeignete Wahl der Teilungsperioden $TP_M$, $TP_{AG1}$, $TP_{AG2}$ kann die Streifenmusterperiode so groß eingestellt werden, dass sie von einer strukturierten Detektoranordnung erfasst werden kann. Die Streifenmusterperiode sollte dazu vorteilhafterweise Werte von 40$\mu$m oder mehr aufweisen. Die strukturierte Detektoranordnung wird vorzugsweise im Kreuzungspunkt der beiden zusammenlaufenden Teilstrahlenbündel platziert. Die gitterförmige Photoelementstruktur stellt in diesem Fall das Vereinigungsgitter dar. Durch die entsprechende Wahl der Teilungsperioden $TP_M$, $TP_{AG1}$, $TP_{AG2}$ kann der Kreuzungspunkt vorteilhafterweise in eine Ebene oberhalb der Abtastplatte gelegt werden.

In einer weiteren Detektionsvariante kann das Vereinigungsgitter auch als ortsabhängiges Ablenkgitter ausgeführt werden. Ein solches ortsabhängiges Ablenkgitter ist beispielsweise aus der US 5497226 bekannt. Das Streifenmustersystem, das sich durch Interferenz der beiden Teilstrahlenbündel am Ort des Vereinigungs- bzw. ortsabhängigen Ablenkgitters ausbildet, wechselwirkt mit dem ortsabhängigen Ablenkgitter, das dieselbe Teilungsperiode wie das Streifenmustersystem besitzt. Das ortsabhängige Ablenkgitter besitzt mehrere streifenförmige Teilbereiche in jeder Teilungsperiode. Jeder solcher Teilbereich wiederum trägt ein Subgitter mit kleiner Teilungsperiode. Die einzelnen Teilbereiche unterscheiden sich in der Teilungsperiode und/oder in der Orientierung der Subgitter zur Messrichtung x. Sie lenken beide auftreffenden Teilstrahlenbündel auf einen jeweils dem Teilbereich zugeordneten Detektorelement. Je nach der Lage der Maxima des Streifenmustersystems relativ zu den einzelnen Teilbereichen des ortsabhängigen Ablenkgitters werden die einzelnen Teilbereiche unterschiedlich stark beleuchtet, so dass die zugehörigen Detektoren ein moduliertes Signal abgeben.

Diese Ausführungsvariante ist vorteilhaft bei großen Teilungsperioden $TP_{VG}$ des Vereinigungsgitters einsetzbar, da dann die Winkelaufspaltung der auslaufenden Teilstrahlenbündel klein ist und diese damit nicht getrennt auf Photoelemente gelenkt werden können.

Bei kleinen Teilungsperioden der Reflexions-Maßverkörperung kann dessen Beugungseffizienz und Phasenverschiebungswirkung von der Polarisation des einfallenden Strahlenbündels abhängen. Um eine Beeinträchtigung der Signale durch solche Polarisationsabhängigkeiten zu vermeiden, ist es vorteilhaft, ausschließlich linear polarisierte Strahlenbündel mit einer gemeinsamen Polarisationsrichtung zu verwenden, die entweder parallel zur Strichrichtung oder parallel zur Messrichtung verlaufen. Dazu kann entweder die Laserdiode entsprechend orientiert angeordnet werden oder aber ein entsprechend ausgerichteter Polarisator im Beleuchtungsstrahlengang eingesetzt werden.

Bei Verwendung von kombinierten diffraktiven Linsen und Ablenkelementen können aufgrund der gekrümmten Gitterstege über den Strahlquerschnitt veränderliche Polarisationszustände auftreten. Um eventuelle polarisationsabhängige Signalverzerrungen zu vermeiden, kann es deshalb weiterhin vorteilhaft sein, in die Strahlengänge beider Teilstrahlenbündel jeweils nach dem letzten durchlaufenden diffraktiven Linsenelement ebenfalls einen Polarisator einzufügen. Die Ausrichtung der Polarisatoren ist in diesem Fall vorzugsweise wiederum parallel zur Messrichtung oder parallel zur Strichrichtung des Maßstabs zu wählen.

Abschließend sei in Bezug auf alternative Ausführungsformen noch darauf hingewiesen, dass das Retroreflektorelement der oben erläuterten fünften Ausführungsform (Fig. 8a - 8d) mit einer Fokussierung sowohl in Messrichtung x als auch in Strichrichtung y der Maßverkörperung selbstverständlich auch mit den anderen Ausführungsbeispielen kombinierbar ist usw..

**Patentansprüche**

1. Positionsmesseinrichtung zur Erfassung der Relativposition einer Abtasteinheit (10; 110; 210; 310; 410; 510; 610; 710) sowie einer hierzu in mindestens einer Messrichtung (x) beweglichen Reflexions-Maßverkörperung (20; 120;

220; 320; 420; 520; 620; 720), wobei die Abtasteinheit (10; 110; 210; 310; 410; 510; 610; 710) mehrere optische Elemente umfasst, nämlich mindestens ein Retroreflektorelement, mindestens ein Vereinigungsgitter (14.5; 114.5; 214.5; 314.5; 414.8; 514.5; 614.5; 714.5), mindestens ein Abtastgitter (14.1 - 14.4; 114.1 - 114.4; 214.1 - 214.4; 314.1 - 314.4; 414.1 - 414.4; 514.1 - 514.4; 614.1 - 614.4; 714.1 - 714.4) sowie mehrere Detektorelemente (16.1, 16.2, 16.3; 116.1, 116.2, 116.3; 216.1, 216.2, 216.3; 316.1, 316.2, 316.3; 416.1, 416.2, 416.3; 516.1, 516.2, 516.3; 616.1, 616.2, 616.3; 716.1, 716.2, 716.3) und wobei die optischen Elemente in der Abtasteinheit (10; 110; 210; 310; 410; 510; 610; 710) dergestalt angeordnet sind,

- dass Strahlenbündel und/oder Teilstrahlenbündel des Abtaststrahlengangs mindestens zwei Mal die Reflexions-Maßverkörperung(20; 120; 220; 320; 420; 520; 620; 720) beaufschlagen und hierbei jeweils durch die einfallenden Strahlenbündel und/oder Teilstrahlenbündel einerseits und die reflektierten Teilstrahlenbündel andererseits eine Ebene aufgespannt wird, die senkrecht zur Ebene der Reflexions-Maßverkörperung (20; 120; 220; 320; 420; 520; 620; 720) orientiert ist,
- dass über das Retroreflektorelement eine Richtungsumkehr der darauf einfallenden Teilstrahlenbündel auf die Reflexions-Maßverkörperung (20; 120; 220; 320; 420; 520; 620; 720) senkrecht zur Messrichtung (x) erfolgt,

**dadurch gekennzeichnet,**
**dass** auf das Vereinigungsgitter (14.5; 114.5; 214.5; 314.5; 414.8; 514.5; 614.5; 714.5) ein Paar von Teilstrahlenbündeln nichtparallel auftrifft und das Vereinigungsgitter (14.5; 114.5; 214.5; 314.5; 414.8; 514.5; 614.5; 714.5) die darauf eintreffenden Teilstrahlenbündel zur Interferenz bringt, so dass die Detektorelemente (16.1, 16.2, 16.3; 116.1, 116.2, 116.3; 216.1, 216.2, 216.3; 316.1, 316.2, 316.3; 416.1, 416.2, 416.3; 516.1, 516.2, 516.3; 616.1, 616.2, 616.3; 716.1, 716.2, 716.3) phasenverschobene Signale erfassen.

2. Positionsmesseinrichtung nach Anspruch 1, **dadurch gekennzeichnet, dass** das Paar von Teilstrahlenbündeln symmetrisch, unter gleichen Winkeln ($\alpha 1$, $\alpha 2$) zur optischen Achse (OA) auf das Vereinigungsgitter (14.5; 114.5; 214.5; 314.5; 414.8; 514.5; 614.5; 714.5) auftrifft.

3. Positionsmesseinrichtung nach Anspruch 1, **dadurch gekennzeichnet, dass** das Vereinigungsgitter (14.5; 114.5; 214.5; 314.5; 414.8; 514.5; 614.5; 714.5) als Transmissionsgitter ausgebildet ist und eine Teilungsperiode ($TP_{VG}$) dergestalt aufweist, die gewährleistet, dass eine Ablenkung der auftreffenden Teilstrahlenbündel in mehrere kollinear austretende Beugungsordnungen erfolgt, die nachfolgend angeordnete Detektorelemente (16.1, 16.2, 16.3; 116.1, 116.2, 116.3; 216.1, 216.2, 216.3; 316.1, 316.2, 316.3; 416.1, 416.2, 416.3; 516.1, 516.2, 516.3; 616.1, 616.2, 616.3; 716.1, 716.2, 716.3) beaufschlagen.

4. Positionsmesseinrichtung nach Anspruch 3, **dadurch gekennzeichnet, dass** das Vereinigungsgitter (14.5; 114.5; 214.5; 314.5; 414.8; 514.5; 614.5; 714.5) dergestalt ausgebildet ist, dass darüber eine Ablenkung der einfallenden Teilstrahlenbündel derart erfolgt, dass eine der kollinear austretenden Beugungsordnungen senkrecht zur Teilungsebene propagiert.

5. Positionsmesseinrichtung nach Anspruch 4, **dadurch gekennzeichnet, dass** das Vereinigungsgitter (14.5; 114.5; 214.5; 314.5; 414.8; 514.5; 614.5; 714.5) als Phasengitter ausgebildet ist und die Steghöhe und Stegbreite desselben derart dimensioniert sind, dass auf den nachgeordneten Detektorelementen (16.1, 16.2, 16.3; 116.1, 116.2, 116.3; 216.1, 216.2, 216.3; 316.1, 316.2, 316.3; 416.1, 416.2, 416.3; 516.1, 516.2, 516.3; 616.1, 616.2, 616.3; 716.1, 716.2, 716.3) drei um 120° phasenversetzte Signale detektierbar sind.

6. Positionsmesseinrichtung nach Anspruch 1, **dadurch gekennzeichnet, dass** das Vereinigungsgitter und die Detektorelemente als strukturierte Detektoranordnung ausgebildet sind.

7. Positionsmesseinrichtung nach Anspruch 1, wobei **dadurch gekennzeichnet, dass** das Vereinigungsgitter (14.5; 114.5; 214.5; 314.5; 414.8; 514.5; 614.5; 714.5) als ortsabhängiges Ablenkgitter ausgebildet ist.

8. Positionsmesseinrichtung nach Anspruch 1, **dadurch gekennzeichnet, dass** die Abtasteinheit (10; 110; 210; 310; 410; 510; 610; 710) mehrere Abtastgitter (14.1 - 14.4; 114.1 - 114.4; 214.1 - 214.4; 314.1 - 314.4; 414.1 - 414.4; 514.1 - 514.4; 614.1 - 614.4; 714.1 - 714.4) sowie mindestens ein Vereinigungsgitter (14.5; 114.5; 214.5; 314.5; 414.8; 514.5; 614.5; 714.5) umfasst und diese spiegelsymmetrisch angeordnet sind, wobei die Symmetrieebene senkrecht zur Messrichtung (x) und parallel zur optischen Achse (OA) orientiert ist.

9. Positionsmesseinrichtung nach mindestens einem der vorhergehenden Ansprüche, **dadurch gekennzeichnet,**

**dass** in der Abtasteinheit (310; 610) ein als Dachkantprisma (318; 618) ausgebildetes Retroreflektorelement angeordnet ist, dessen Dachkante (318.1; 618.1) parallel zur Messrichtung (x) orientiert ist.

10. Positionsmesseinrichtung nach mindestens einem der vorhergehenden Ansprüche, **dadurch gekennzeichnet, dass** das Retroreflektorelement in der Abtasteinheit (10; 110; 210; 410; 510; 710) mehrere kombinierte Ablenk-/Linsenelemente sowie mindestens ein planes Reflektorelement (15.1, 15.2; 115.1, 115.2; 215.1, 215.2; 415.1, 415.2; 515; 715.1, 715.2) umfasst und die Brennebene der Linsenelemente in der Ebene des mindestens einen planen Reflektorelements (15.1, 15.2; 115.1, 115.2; 215.1, 215.2; 415.1, 415.2; 515; 715.1, 715.2) liegt.

11. Positionsmesseinrichtung nach Anspruch 10, **dadurch gekennzeichnet, dass** die Linsenelemente als diffraktive Linsenelemente ausgebildet sind, die Ablenkelemente als Abtastgitter (14.1 - 14.4; 114.1 - 114.4; 214.1 - 214.4; 414.1 - 414.4; 514.1 - 514.4; 714.1 - 714.4) ausgebildet sind und zusammen als kombinierte, diffraktive Gitter-Linsen-Elemente ausgebildet sind.

12. Positionsmesseinrichtung nach Anspruch 10, **dadurch gekennzeichnet, dass** die Linsenelemente als diffraktive Linsenelemente in Form von Zylinderlinsen ausgebildet sind, die in Strichrichtung (y) der Reflexions-Maßverkörperung eine fokussierende Wirkung besitzen.

13. Positionsmesseinrichtung nach Anspruch 10, **dadurch gekennzeichnet, dass** die Linsenelemente als diffraktive Linsenelemente in Form von zylindersymmetrischen Linsenelementen ausgebildet sind, die sowohl in Strichrichtung (y) der Reflexions-Maßverkörperung als auch in Messrichtung (x) eine fokussierende Wirkung besitzen.

14. Positionsmesseinrichtung nach Anspruch 10, **dadurch gekennzeichnet, dass** das Retroreflektorelement ein planparalleles Trägersubstrat (13.1; 113.1; 213.1; 413.1, 513.1; 713.1) umfasst, auf deren, der Reflexions-Maßverkörperung (20; 120; 220; 420; 520; 720) zugewandten Seite mehrere Gitter angeordnet sind und auf deren, zur Reflexions-Maßverkörperung (20; 120; 220; 420; 520; 720) abgewandten Seite das mindestens eine, plane Reflektorelement (15.1, 15.2; 115.1, 115.2; 215.1, 215.2; 415.1, 415.2; 515; 715.1, 715.2) angeordnet ist.

15. Positionsmesseinrichtung nach Anspruch 1, **dadurch gekennzeichnet, dass** die Auftrefforte der beiden Teilstrahlenbündel am Vereinigungsgitter (14.5; 114.5; 214.5; 314.5; 414.8; 514.5; 614.5; 714.5) zusammentreffen.

16. Positionsmesseinrichtung nach Anspruch 1**dadurch gekennzeichnet, dass** das mindestens eine Retroreflektorelement als monolytische Baueinheit auf einem Trägerelement ausgebildet ist

17. Positionsmesseinrichtung nach Anspruch 1, **dadurch gekennzeichnet, dass** die Abtasteinheit (10; 110; 210; 310; 410; 510; 610; 710) mehrere Abtastgitter (14.1 - 14.4; 114.1 - 114.4; 214.1 - 214.4; 314.1 - 314.4; 414.1 - 414.4; 514.1 - 514.4; 614.1 - 614.4; 714.1 - 714.4) sowie mindestens ein Vereinigungsgitter (14.1 - 14.4; 114.1 - 114.4; 214.1 - 214.4; 314.1 - 314.4; 414.1 - 414.4; 514.1 - 514.4; 614.1 - 614.4; 714.1 - 714.4) umfasst und diese spiegelsymmetrisch angeordnet sind, wobei die Symmetrieebene parallel zur Messrichtung (x) und parallel zur optischen Achse (OA) orientiert ist.

18. Positionsmesseinrichtung nach mindestens einem der Ansprüche 1 - 16, **dadurch gekennzeichnet, dass** die Abtasteinheit (10) dergestalt ausgebildet ist, dass die von einer Lichtquelle (11) emittierten Strahlenbündel nach einer Kollimation über eine Kollimatoroptik (12)

   - ein erstes Mal auf die Reflexions-Maßverkörperung (20) auftreffen, wo eine Aufspaltung in zwei zur Abtasteinheit (10) rückreflektierte Teilstrahlenbündel erfolgt, die zwei unterschiedlichen Beugungsordnungen entsprechen,
   - die beiden rückreflektierten Teilstrahlenbündel in der Abtasteinheit (10) über das Retroreflektorelement eine Rückreflexion in Richtung Reflexions-Maßverkörperung (20) erfahren, wobei die Teilstrahlenbündel je zweimal Abtastgitter (14.1, 14.2, 14.3, 14.4) durchlaufen,
   - die auf die Reflexions-Maßverkörperung (20) ein zweites Mal auftreffenden Teilstrahlenbündel eine erneute Beugung und Rückreflexion in Richtung der Abtasteinheit (10) erfahren,
   - in der Abtasteinheit (10) mindestens ein Paar rückreflektierter Teilstrahlenbündel unter symmetrischen Winkeln ($\alpha$1, $\alpha$2) zur optischen Achse (OA) am gleichen Ort auf das Vereinigungsgitter (14.5) auftrifft.

19. Positionsmesseinrichtung nach mindestens einem der Ansprüche 1-17 **dadurch gekennzeichnet, dass** die Abtasteinheit (110; 210; 310; 710) dergestalt ausgebildet ist, dass die von einer Lichtquelle (111; 211; 311; 711) emittierten Strahlenbündel nach einer Kollimation über eine Kollimatoroptik (112; 212; 312; 712)

- über ein Aufspaltgitter (114.6; 214.6; 314.6; 714.6) in der Abtasteinheit (110; 210; 310; 710) eine Aufspaltung in mindestens zwei Teilstrahlenbündel erfolgt, die zwei unterschiedlichen Beugungsordnungen entsprechen und diese Teilstrahlenbündel in Richtung Reflexions-Maßverkörperung (120; 220; 320; 720) propagieren,
- die Teilstrahlenbündel dann ein erstes Mal an unterschiedlichen Orten auf die Reflexions-Maßverkörperung (120; 220; 320; 720) auftreffen, wo jeweils eine Aufspaltung in mehrere zur Abtasteinheit (110; 210; 310; 710) rückreflektierte Teilstrahlenbündel erfolgt, die unterschiedlichen Beugungsordnungen entsprechen,
- die mindestens zwei zurückreflektierten Teilstrahlenbündel in der Abtasteinheit (110; 210; 310; 710) über das Retroreflektorelement eine Rückreflexion in Richtung Reflexions-Maßverkörperung (120; 220; 320; 720) erfahren und wobei die Teilstrahlenbündel je zweimal ein Abtastgitter (114.1 - 114.4; 214.1 - 214.4; 314.1 - 314.4; 714.1 - 714.4) durchlaufen,
- die auf die Reflexions-Maßverkörperung (120; 220; 320; 720) ein zweites Mal an unterschiedlichen Orten auftreffenden Teilstrahlenbündel eine erneute Beugung und Rückreflexion in Richtung der Abtasteinheit (110; 210; 310; 710) erfahren,
- in der Abtasteinheit (110; 210; 310; 710) mindestens ein Paar rückreflektierter Teilstrahlenbündel unter symmetrischen Winkeln ($\alpha 1$, $\alpha 2$) zur optischen Achse (OA) am gleichen Ort auf das Vereinigungsgitter (114.5; 214.5; 314.5; 714.5) auftrifft.

20. Positionsmesseinrichtung nach Anspruch 19, **dadurch gekennzeichnet, dass**

- die Abtastgitter (214.1 - 214.4) in der Abtasteinheit (210) als Fresnel-Zylinderlinsen ausgebildet sind, deren Brennlinien sich in der Ebene der Reflektorelemente (215.1, 215.2) befinden und
- die Teilungsperiode ($TP_{AG0}$) des Aufspaltgitters (214.6) identisch zur Teilungsperiode ($TP_{AG1}$) des Vereinigungsgitters (214.4) und zur Teilungsperiode ($TP_M$) der Reflexions-Maßverkörperung (220) gewählt ist.

21. Positionsmesseinrichtung nach Anspruch 19, **dadurch gekennzeichnet, dass** die Teilungsperiode ($TP_M$) der Reflexions-Maßverkörperung (320; 720) dergestalt gewählt ist, dass sich die in Richtung Abtasteinheit (310; 710) zurückreflektierten Teilstrahlenbündel vor dem ersten Auftreffen auf ein Abtastgitter (314.1 - 314.4; 714.1 - 714.4) überkreuzen.

22. Positionsmesseinrichtung nach Anspruch 21, **dadurch gekennzeichnet, dass** die Teilungsperiode ($TP_M$) der Reflexions-Maßverkörperung (320; 720) kleiner als die Wellenlänge ($\lambda$) der verwendeten Lichtquelle () 311; 711) gewählt ist.

23. Positionsmesseinrichtung nach Anspruch 20, **dadurch gekennzeichnet, dass** das mindestens eine Retroreflektorelement als kombiniertes Ablenk-/Linsenelement (714.1, 714.2, 714.3, 714.4) ausgebildet ist.

24. Positionsmesseinrichtung nach mindestens einem der Ansprüche 1 - 17, **dadurch gekennzeichnet, dass** die Abtasteinheit (410) dergestalt ausgebildet ist, dass die von einer Lichtquelle (411) emittierten Strahlenbündel nach einer Kollimation über eine Kollimatoroptik (412)

- über ein Aufspaltgitter (414.6) eine Aufspaltung in zwei Teilstrahlenbündel erfolgt,
- die beiden Teilstrahlenbündel dann auf ein Aufspalt-Hilfsgitter (414.7) gelangen, mit dem eine Umlenkung zumindest eines Teils der Teilstrahlenbündel dergestalt erfolgt, dass die in Richtung der Reflexions-Maßverkörperung (420) propagierenden Teilstrahlenbündel am gleichen Auftreffort auf die Reflexions-Maßverkörperung (420) auftreffen und
- die auf die Reflexions-Maßverkörperung (420) auftreffenden Teilstrahlenbündel jeweils in mehrere zur Abtasteinheit (410) rückreflektierte Teilstrahlenbündel aufgespalten werden, die unterschiedlichen Beugungsordnungen entsprechen,
- die mindestens zwei zurückreflektierten Teilstrahlenbündel in der Abtasteinheit (410) über das Retroreflektorelement eine Rückreflexion in Richtung Reflexions-Maßverkörperung (420) erfahren, wobei die Teilstrahlenbündel je zweimal ein Abtastgitter (414.1, 414.2, 414.3, 414.4) durchlaufen,
- die auf die Reflexions-Maßverkörperung (420) ein zweites Mal am gleichen Ort auftreffenden Teilstrahlenbündel eine erneute Beugung und Rückreflexion in Richtung der Abtasteinheit (410) erfahren,
- in der Abtasteinheit (410) mindestens ein Paar rückreflektierter Teilstrahlenbündel an unterschiedlichen Orten auf ein Vereinigungs-Hilfsgitter (414.4) auftrifft, wo eine erneute Beugung und Aufspaltung erfolgt, so dass mindestens zwei weiter propagierende Teilstrahlenbündel unter symmetrischen Winkeln zur optischen Achse am gleichen Ort auf das Vereinigungsgitter (414.8) auftreffen.

**25.** Positionsmesseinrichtung nach mindestens einem der Ansprüche 1 - 16, **dadurch gekennzeichnet, dass** die Abtasteinheit (510) dergestalt ausgebildet ist, dass die von einer Lichtquelle (511) emittierten Strahlenbündel nach einer Kollimation über eine Kollimatoroptik (512)

- ein erstes Mal auf die Reflexions-Maßverkörperung (520) auftreffen, die als Auflicht-Beugungsgitter ausgebildet ist, wo eine Aufspaltung in zwei zur Abtasteinheit (510) rückreflektierte Teilstrahlenbündel erfolgt, die zwei unterschiedlichen Beugungsordnungen entsprechen,
- die beiden rückreflektierten Teilstrahlenbündel in der Abtasteinheit (510) über das Retroreflektorelement eine Rückreflexion in Richtung Reflexions-Maßverkörperung (520) erfahren, wobei die Teilstrahlenbündel je zweimal ein Abtastgitter (514.1, 514.2, 514.3, 514.4) durchlaufen und beim ersten Durchlauf durch die Abtastgitter (514.1, 514.2, 514.3, 514.4) eine Punktfokussierung der Teilstrahlenbündel auf den gleichen Auftreffort an einem planen Reflektorelement (515) resultiert,
- die auf die Reflexions-Maßverkörperung (520) ein zweites Mal auftreffenden Teilstrahlenbündel eine erneute Beugung und Rückreflexion in Richtung der Abtasteinheit (510) erfahren,
- in der Abtasteinheit (510) mindestens ein Paar rückreflektierter Teilstrahlenbündel unter symmetrischen Winkeln zur optischen Achse (OA) am gleichen Ort auf das Vereinigungsgitter (514.5) auftrifft.

## Claims

**1.** A position measuring device for detecting the relative position of a scanning unit (10; 110; 210; 310; 410; 510; 610; 710) as well as of a reflection material measure (20; 120; 220; 320; 420; 520; 620; 720), which can be moved relative thereto in at least one measuring direction (x), wherein the scanning unit (10; 110; 210; 310; 410; 510; 610; 710) comprises a plurality of optical elements, namely at least one retro reflector element, at least one combining grating (14.5; 114.5; 214.5; 314.5; 414.8; 514.5; 614.5; 714.5), at least one scanning grating (14.1-14.4; 114.1-114.4; 214.1-214.4; 314.1-314.4; 414.1-414.4; 514.1-514.4; 614.1-614.4; 714.1-714.4) as well as a plurality of detector elements (16.1, 16.2, 16.3; 116.1, 116.2, 116.3; 216.1, 216.2, 216.3; 316.1, 316.2, 316.3; 416.1, 416.2, 416.3; 516.1, 516.2, 516.3; 616.1, 616.2, 616.3; 716.1, 716.2, 716.3) and wherein the optical elements are arranged in the scanning unit (10; 110; 210; 310; 410; 510; 610; 710) such

- that radiation beams and/or partial radiation beams of the scanning radiating path impact the reflection material measure (20; 120; 220; 320; 420; 520; 620; 720) at least twice and a plane is hereby spanned in each case by the radiation beams and/or partial radiation beams, which are incident on the one hand and the reflected partial radiation beams on the other hand, with said plane being oriented vertically to the plane of the reflection material measure (20; 120; 220; 320; 420; 520; 620; 720),
- that a reversal of the direction of the partial radiation beams, which are incident thereon on the reflection material measure (20; 120; 220; 320; 420; 520; 620; 720) takes place via the retro reflector element vertically to the measuring direction (x),

**characterized in**
**that** a pair of partial radiation beams is incident in a non-parallel manner on the combining grating (14.5; 114.5; 214.5; 314.5; 414.8; 514.5; 614.5; 714.5) and that the combining grating (14.5; 114.5; 214.5; 314.5; 414.8; 514.5; 614.5; 714.5) brings the partial radiation beams, which are incident thereon, to interference, so that the detector elements (16.1, 16.2, 16.3; 116.1, 116.2, 116.3; 216.1, 216.2, 216.3; 316.1, 316.2, 316.3; 416.1, 416.2, 416.3; 516.1, 516.2, 516.3; 616.1, 616.2, 616.3; 716.1, 716.2, 716.3) detect phase-shifted signals.

**2.** The position measuring device according to claim 1, **characterized in that** the pair of partial radiation beams is incident on the combining grating (14.5; 114.5; 214.5; 314.5; 414.8; 514.5; 614.5; 714.5)symmetrically, under the same angles (a1, $\alpha$2) to the optical axis (OA).

**3.** The position measuring device according to claim 1, **characterized in that** the combining grating (14.5; 114.5; 214.5; 314.5; 414.8; 514.5; 614.5; 714.5) is embodied as a transmission grating and encompasses a graduation period ($TP_{VG}$), which ensures that a deflection of the incident partial radiation beams takes place in a plurality of collinear escaping diffraction orders, which impact detector elements (16.1, 16.2, 16.3; 116.1, 116.2, 116.3; 216.1, 216.2, 216.3; 316.1, 316.2, 316.3; 416.1, 416.2, 416.3; 516.1, 516.2, 516.3; 616.1, 616.2, 616.3; 716.1, 716.2, 716.3), which are arranged consecutively.

4. The position measuring device according to claim 3, **characterized in that** the combining grating (14.5; 114.5; 214.5; 314.5; 414.8; 514.5; 614.5; 714.5) is embodied such that a deflection of the incident partial radiation beams takes place above it such that one of the collinear escaping diffraction orders propagates vertically to the dividing plane.

5. The position measuring device according to claim 4, **characterized in that** the combining grating (14.5; 114.5; 214.5; 314.5; 414.8; 514.5; 614.5; 714.5) is embodied as a phase grating and that the height and width thereof are dimensioned such that three signals, which are phase-shifted by 120°, can be detected on the detector elements (16.1, 16.2, 16.3; 116.1, 116.2, 116.3; 216.1, 216.2, 216.3; 316.1, 316.2, 316.3; 416.1, 416.2, 416.3; 516.1, 516.2, 516.3; 616.1, 616.2, 616.3; 716.1, 716.2, 716.3), which are arranged downstream.

6. The position measuring device according to claim 1, **characterized in that** the combining grating and the detector elements are embodied as structured detector arrangement.

7. The position measuring device according to claim 1, **characterized in that** the combining grating (14.5; 114.5; 214.5; 314.5; 414.8; 514.5; 614.5; 714.5) is embodied as a location-dependent deflection grating.

8. The position measuring device according to claim 1, **characterized in that** the scanning unit (10; 110; 210; 310; 410; 510; 610; 710) comprises a plurality of scanning gratings (14.1-14.4; 114.1-114.4; 214.1-214.4; 314.1-314.4; 414.1-414.4; 514.1-514.4; 614.1-614.4; 714.1-714.4) as well as at least one combining grating (14.5; 114.5; 214.5; 314.5; 414.8; 514.5; 614.5; 714.5) and **in that** that they are arranged in a mirror-symmetrical manner, wherein the symmetry plane is oriented vertically to the measuring direction (x) and parallel to the optical axis (OA).

9. The position measuring device according to at least one of the preceding claims, **characterized in that** a retro reflector element, which is embodied as a roof prism (318; 618), the roof edge (318.1; 618.1) of which is oriented parallel to the measuring direction (x), is arranged in the scanning unit (310; 610).

10. The position measuring device according to at least one of the preceding claims, **characterized in that** the retro reflector element in the scanning unit (10; 110; 210; 410; 510; 710) comprises a plurality of combined deflection/ lens elements as well as at least one flat reflector element (15.1, 15.2; 115.1, 115.2; 215.1, 215.2; 415.1, 415.2; 515; 715.1, 715.2) and the focal plane of the lens elements is located in the plane of the at least one flat reflector element (15.1, 15.2; 115.1, 115.2; 215.1, 215.2; 415.1, 415.2; 515; 715.1, 715.2).

11. The position measuring device according to claim 10, **characterized in that** the lens elements are embodied as diffractive lens elements, that the deflection elements are embodied as scanning gratings (14.1-14.4; 114.1-114.4; 214.1-214.4; 314.1-314.4; 414.1-414.4; 514.1-514.4; 614.1-614.4; 714.1-714.4) and together are embodied as combined, diffractive grating-lens elements.

12. The position measuring device according to claim 10, **characterized in that** the lens elements are embodied as diffractive lens elements in the form of cylinder lenses, which have a focusing effect in the line direction (y) of the reflection material measure.

13. The position measuring device according to claim 10, **characterized in that** the lens elements are embodied as diffractive lens elements in the form of cylindrically symmetric lens elements, which have a focusing effect in line direction (y) of the reflection material measure as well as in measuring direction (x).

14. The position measuring device according to claim 10, **characterized in that** the retro reflector element comprises a planar parallel support substrate (13.1; 113.1; 213.1; 413.1; 513.1; 713.1), on the side of which, which faces the reflection material measure (20; 120; 220; 420; 520; 720), a plurality of gratings are arranged and on the side of which, which faces the reflection material measure (20; 120; 220; 420; 520; 720), the at least one flat reflector element (15.1, 15.2; 115.1, 115.2; 215.1, 215.2; 415.1, 415.2; 515; 715.1, 715.2) is arranged.

15. The position measuring device according to claim 1, **characterized in that** the striking locations of the two partial radiation beams meet at the combining grating (14.5; 114.5; 214.5; 314.5; 414.8; 514.5; 614.5; 714.5).

16. The position measuring device according to claim 1, **characterized in that** the at least one retro reflector element is embodied as a monolithic component on a support element.

**17.** The position measuring device according to claim 1, **characterized in that** the scanning unit (10; 110; 210; 310; 410; 510; 610; 710) comprises a plurality of scanning gratings (14.1-14.4; 114.1-114.4; 214.1-214.4; 314.1-314.4; 414.1-414.4; 514.1-514.4; 614.1-614.4; 714.1-714.4) as well as at least one combining grating (14.1-14.4; 114.1-114.4; 214.1-214.4; 314.1-314.4; 414.1-414.4; 514.1-514.4; 614.1-614.4; 714.1-714.4) and that they are arranged in a mirror symmetrical manner, wherein the symmetry plane is oriented parallel to the measuring direction (x) and parallel to the optical axis (OA).

**18.** The position measuring device according to at least one of claims 1-16, **characterized in that** the scanning unit (10) is embodied such that, after a collimation via a collimator lens (12), the radiation beams emitted by a light source (11)

- strike the reflection material measure (20) for the first time at the location, where a splitting into two partial radiation beams, which are reflected back to the scanning unit (10) and which correspond to two different diffraction orders, takes place,
- the two partial radiation beams, which are reflected back, experience a reflection back in the direction of the reflection material measure (20) in the scanning unit (10) via the retro reflector element, wherein the partial radiation beams in each case run through scanning gratings (14.1, 14.2, 14.3, 14.4) twice,
- the partial radiation beams striking the reflection material measure (20) a second time experience a diffraction and reflection back in the direction of the scanning unit (10) again,
- at least one pair of partial radiation beams, which are reflected back, strikes the combining grating (14.5) at the same location in the scanning unit (10) under symmetrical angles ($\alpha 1$, $\alpha 2$) to the optical axis (OA).

**19.** The position measuring device according to at least one of claims 1-17, **characterized in that** the scanning unit (110; 210; 310; 710) is embodied such that, after a collimation via a collimator lens (112; 212; 312; 712), the radiation beams emitted by a light source (111; 211; 311; 711)

- a splitting into at least two partial radiation beams, which correspond to two different diffraction orders and which propagate these partial radiation beams in the direction reflection material measure (120; 220; 320; 720), takes place via a splitting grating (114.6; 214.6; 314.6; 714.6) in the scanning unit (110; 210; 310; 710),
- the partial radiation beams then strike the reflection material measure (120; 220; 320; 720) for the first time at different locations, where a splitting into a plurality of partial radiation beams, which are reflected back to the scanning unit (100; 210; 310; 710) and which correspond to different diffraction orders, takes place
- the at least two partial radiation beams, which are reflected back, experience a reflection back in the direction of the reflection material measure (120; 220; 320; 720) in the scanning unit (110; 210; 310; 710) via the retro reflector element and wherein the partial radiation beams in each case run through a scanning grating (114.1-114.4; 214.1-214.4; 314.1-314.4; 714.1-714.4) twice,
- the partial radiation beams, which strike the reflection material measure (120; 220; 320; 720) a second time at different locations experience a diffraction and reflection back in the direction of the scanning unit (110; 210; 310; 710) again,
- at least one pair of partial radiation beams, which are reflected back, strikes the combining grating (114.5; 214.5; 314.5; 714.5) at the same location in the scanning unit (110; 210; 310; 710) under symmetrical angles ($\alpha 1$, $\alpha 2$) to the optical axis (OA).

**20.** The position measuring device according to claim 19, **characterized in that**

- the scanning gratings (214.1-214.4) in the scanning unit (210) are embodied as Fresnel cylinder lenses, the focal lines of which are located in the plane of the reflector elements (215.1, 215.2) and
- the graduation period ($TP_{AG0}$) of the splitting grating (214.6) is chosen to be identical to the graduation period ($TP_{AG1}$) of the combining grating (214.4) and to the graduation period ($TP_M$) of the reflection material measure (220).

**21.** The position measuring device according to claim 19, **characterized in that** the graduation period ($TP_M$) of the reflection material measure (320; 720) is chosen such that the partial radiation beams, which reflect back in the direction of the scanning unit (210; 710), intersect before they strike a scanning grating (314.1-314.4; 714.1-714.4) for the first time.

**22.** The position measuring device according to claim 21, **characterized in that** the graduation period ($TP_M$) of the reflection material measure (320; 720) is chosen to be smaller than the wavelength ($\lambda$) of the used light source (311;

711).

**23.** The position measuring device according to claim 20, **characterized in that** the at least one retro reflector element is embodied as a combined deflection/lens element (714.1, 714.2, 714.3, 714.4).

**24.** The position measuring device according to at least one of claims 1-17, **characterized in that**, after a collimation via a collimator lens (412), the scanning unit (410) is embodied such that the radiation beams emitted by a light source (411)

- a splitting into two partial radiation beams takes place via a splitting grating (414.6),
- the two partial radiation beams then reach an auxiliary splitting grating (414.7), by means of which a deflection of at least a part of the partial radiation beams takes place such that the partial radiation beams propagating in the direction of the reflection material measure (420) strike the reflection material measure (420) at the same location and
- the partial radiation beams striking the reflection material measure (420) are in each case split into a plurality of partial radiation beams, which reflect back to the scanning unit (410) and which correspond to different diffraction orders,
- the at least two partial radiation beams, which are reflected back, experience a reflection back in the direction of the reflection material measure (420) in the scanning unit (410) via the retro reflector element, wherein the partial radiation beams in each case run through a scanning grating (414.1, 414.2, 414.3, 414.4) twice,
- the partial radiation beams striking the reflection material measure (420) at the same location experience a diffraction and reflection back in the direction of the scanning unit (410) again,
- at least one pair of partial radiation beams, which are reflected back, strikes an auxiliary combining grating (414.4) in the scanning unit (410) at different locations, where a diffraction and splitting takes place again, so that at least two further propagating partial radiation beams strike the combining grating (414.8) at the same location under symmetrical angles to the optical axis.

**25.** The position measuring device according to at least one of claims 1-16, **characterized in that**, after a collimation via a collimator lens (512), the scanning unit (510) is embodied such that the radiation beams emitted by a light source (511)

- strike the reflection material measure (520), which is embodied as an incident light diffraction grating, for the first time at the location where a splitting into two partial radiation beams, which are reflected back to the scanning unit (510) and which correspond to two different diffraction orders, takes place,
- the two partial radiation beams, which are reflected back, experience a reflection back in the direction of the reflection material measure (520) in the scanning unit (510) via the retro reflector element, wherein the partial radiation beams in each case run through a scanning grating (514.1, 514.2, 514.3, 514.4) twice and a point focusing of the partial radiation beams to the same striking location on a flat reflector element (515) results in response to the first-time passage through the scanning gratings (514.1, 514.2, 514.3, 514.4),
- the partial radiation beams striking the reflection material measure (520) a second time experience a diffraction and reflection back in the direction of the scanning unit (510) again,
- at least one pair of partial radiation beams, which reflect back, strikes the combining grating (514.5) at the same location in the scanning unit (510) under symmetrical angles to the optical axis (OA).

**Revendications**

**1.** Dispositif de mesure de position, destiné à la détection de la position relative d'une unité de balayage (10 ; 110 ; 210 ; 310 ; 410 ; 510 ; 610 ; 710), ainsi qu'une mesure matérialisée à réflexion (20 ; 120 ; 220 ; 320 ; 420 ; 520 ; 620 ; 720), déplaçable au moins dans une direction de mesurage (x), dans lequel l'unité de balayage (10 ; 110 ; 210 ; 310 ; 410 ; 510 ; 610 ; 710) comprend plusieurs éléments optiques, notamment au moins un élément rétro-réflecteur, au moins une grille de réunification (14.5 ; 114.5 ; 214.5 ; 314.5 ; 414.8 ; 514.5 ; 614.5 ; 714.5), au moins une grille de balayage (14.1-14.4 ; 114.1-114.4 ; 214.1-214.4 ; 314.1-314.4 ; 414.1-414.4 ; 514.1-514.4 ; 614.1-614.4 ; 714.1-714.4), ainsi que plusieurs éléments détecteurs (16.1, 16.2, 16.3 ; 116.1, 116.2, 116.3 ; 216.1, 216.2, 216.3 ; 316.1, 316.2, 316.3 ; 416.1, 416.2, 416.3 ; 516.1, 516.2, 516.3 ; 616.1, 616.2, 616.3 ; 716.1, 716.2, 716.3), et dans lequel les éléments optiques situés dans l'unité de balayage (10 ; 110 ; 210 ; 310 ; 410 ; 510 ; 610 ; 710) sont disposés de telle manière que

- les faisceaux de rayons et/ou les faisceaux de rayons partiels rencontrent au moins deux fois la mesure matérialisée à réflexion (20 ; 120 ; 220 ; 320 ; 420 ; 520 ; 620 ; 720), un plan étant respectivement déployé par les faisceaux de rayons incidents et/ou les faisceaux de rayons partiels d'une part et les faisceaux de rayons partiels réfléchis d'autre part, lequel est orienté perpendiculairement au plan de la mesure matérialisée à réflexion (20 ; 120 ; 220 ; 320 ; 420 ; 520 ; 620 ; 720),

- un retour de direction des faisceaux de rayons partiels incidents sur la mesure matérialisée à réflexion (20 ; 120 ; 220 ; 320 ; 420 ; 520 ; 620 ; 720) est réalisé, perpendiculairement à la direction de mesurage (x), par le biais de l'élément rétro-réflecteur,

**caractérisé en ce que**

- une paire de faisceaux de rayons partiels ne tombe pas parallèlement sur la grille de réunification (14.5 ; 114.5 ; 214.5 ; 314.5 ; 414.8 ; 514.5 ; 614.5 ; 714.5), et la grille de réunification (14.5 ; 114.5 ; 214.5 ; 314.5 ; 414.8 ; 514.5 ; 614.5 ; 714.5) met en interférence les faisceaux de rayons partiels incidents, de sorte que les éléments détecteurs (16.1, 16.2, 16.3 ; 116.1, 116.2, 116.3 ; 216.1, 216.2, 216.3 ; 316.1, 316.2, 316.3 ; 416.1, 416.2, 416.3 ; 516.1, 516.2, 516.3 ; 616.1, 616.2, 616.3 ; 716.1, 716.2, 716.3) détectent des signaux décalés en phase.

2. Dispositif de mesure de position selon la revendication 1, **caractérisé en ce que** la paire de faisceaux de rayons partiels rencontre la grille de réunification (14.5 ; 114.5 ; 214.5 ; 314.5 ; 414.8 ; 514.5 ; 614.5 ; 714.5) de façon symétrique, avec les mêmes angles ($\alpha$1, $\alpha$2) par rapport à l'axe optique (OA).

3. Dispositif de mesure de position selon la revendication 1, **caractérisé en ce que** la grille de réunification (14.5 ; 114.5 ; 214.5 ; 314.5 ; 414.8 ; 514.5 ; 614.5 ; 714.5) est formée comme une grille de transmission, et comporte une période de graduation ($TP_{VG}$) garantissant la déviation des faisceaux de rayons partiels incidents en plusieurs ordres de diffraction sortant de manière colinéaires, qui rencontrent les éléments détecteurs (16.1, 16.2, 16.3 ; 116.1, 116.2, 116.3 ; 216.1, 216.2, 216.3 ; 316.1, 316.2, 316.3 ; 416.1, 416.2, 416.3 ; 516.1, 516.2, 516.3 ; 616.1, 616.2, 616.3 ; 716.1, 716.2, 716.3) disposés à la suite.

4. Dispositif de mesure de position selon la revendication 3, **caractérisé en ce que** la grille de réunification (14.5 ; 114.5 ; 214.5 ; 314.5 ; 414.8 ; 514.5 ; 614.5 ; 714.5) est conçue de manière à ce que les faisceaux de rayons partiels incidents soient déviés de telle façon, que l'un des ordres de diffraction sortant de manière colinéaire se propage perpendiculairement au plan de séparation.

5. dispositif de mesure de position selon la revendication 4, **caractérisé en ce que** la grille de réunification (14.5 ; 114.5 ; 214.5 ; 314.5 ; 414.8 ; 514.5 ; 614.5 ; 714.5) est conçue comme un réseau de phase, et la hauteur d'âme ainsi que la largeur d'âme de celui-ci sont dimensionnées de manière à ce que trois signaux décalés en phase de 120° puissent être détectés sur les éléments détecteurs (16.1, 16.2, 16.3 ; 116.1, 116.2, 116.3 ; 216.1, 216.2, 216.3 ; 316.1, 316.2, 316.3 ; 416.1, 416.2, 416.3 ; 516.1, 516.2, 516.3 ; 616.1, 616.2, 616.3 ; 716.1, 716.2, 716.3) disposés à la suite.

6. Dispositif de mesure de position selon la revendication 1, **caractérisé en ce que** la grille de réunification et les éléments détecteurs sont conçus comme un ensemble de détection structuré.

7. Dispositif de mesure de position selon la revendication 1, **caractérisé en ce que** la grille de réunification (14.5 ; 114.5 ; 214.5 ; 314.5 ; 414.8 ; 514.5 ; 614.5 ; 714.5) est conçue comme une grille de déflexion en fonction de l'espace.

8. Dispositif de mesure de position selon la revendication 1, **caractérisé en ce que** l'unité de balayage (10 ; 110 ; 210 ; 310 ; 410 ; 510 ; 610 ; 710) comprend plusieurs grilles de balayage (14.1-14.4 ; 114.1-114.4 ; 214.1-214.4 ; 314.1-314.4 ; 414.1-414.4 ; 514.1-514.4 ; 614.1-614.4 ; 714.1-714.4), ainsi qu'au moins une grille de réunification (14.5 ; 114.5 ; 214.5 ; 314.5 ; 414.8 ; 514.5 ; 614.5 ; 714.5), qui sont disposées symétriquement, le plan de symétrie étant orienté perpendiculairement à la direction de mesurage (x) et parallèlement à l'axe optique (OA).

9. Dispositif de mesure de position selon au moins l'une des revendications précédentes, **caractérisé en ce qu'**un élément rétro-réflecteur, conçu comme un prisme en toit (318 ; 618) dont le chant (318.1 ; 618.1) est orienté parallèlement à la direction de mesurage (x), est installé dans l'unité de balayage (310 ; 610).

10. Dispositif de mesure de position selon au moins l'une des revendications précédentes, **caractérisé en ce que** l'élément rétro-réflecteur dans l'unité de balayage (10 ; 110 ; 210 ; 310 ; 410 ; 510 ; 610 ; 710) comprend plusieurs éléments de déviation/de lentille combinés, ainsi qu'au moins un élément réflecteur plan (15.1, 15.2 ; 115.1, 115.2 ;

215.1, 215.2 ; 415.1, 415.2 ; 515 ; 715.1, 715.2), et le plan focal des éléments de lentille se trouve dans le plan de l'au moins un élément réflecteur plan (15.1, 15.2 ; 115.1, 115.2 ; 215.1, 215.2 ; 415.1, 415.2 ; 515 ; 715.1, 715.2).

11. Dispositif de mesure de position selon la revendication 10, **caractérisé en ce que** les éléments de lentille sont conçus comme des éléments de lentilles diffractives, les éléments de déviation sont conçus comme des grille de balayage (14.1-14.4 ; 114.1-114.4 ; 214.1-214.4 ; 314.1-314.4 ; 414.1-414.4 ; 514.1-514.4 ; 614.1-614.4 ; 714.1-714.4), et ensemble, ils sont conçus comme des éléments de lentille à grille diffractive combinés.

12. Dispositif de mesure de position selon la revendication 10, **caractérisé en ce que** les éléments de lentille sont conçus comme des éléments de lentille diffractive en forme de lentilles cylindriques, possédant un effet focalisant dans la direction linéaire (y) de la mesure matérialisée à réflexion.

13. Dispositif de mesure de position selon la revendication 10, **caractérisé en ce que** les éléments de lentille sont conçus comme des éléments de lentille diffractive, en forme d'éléments de lentille à symétrie cylindrique, possédant un effet focalisant aussi bien dans la direction linéaire (y) de la mesure matérialisée à réflexion que dans la direction de mesurage (x).

14. Dispositif de mesure de position selon la revendication 10, **caractérisé en ce que** l'élément rétro-réflecteur comprend un substrat (13.1 ; 113.1 ; 213.1 ; 413.1 ; 513.1 ; 713.1) parallèle au plan, portant plusieurs grilles de son côté tourné vers la mesure matérialisée à réflexion (20 ; 120 ; 220 ; 320 ; 420 ; 520 ; 620 ; 720), du côté détourné de la mesure matérialisée à réflexion (20 ; 120 ; 220 ; 320 ; 420 ; 520 ; 620 ; 720) desquelles est disposé l'au moins un élément réflecteur plan (15.1, 15.2 ; 115.1, 115.2 ; 215.1, 215.2 ; 415.1, 415.2 ; 515 ; 715.1, 715.2).

15. Dispositif de mesure de position selon la revendication 1, **caractérisé en ce que** les points d'incidence des deux faisceaux de rayons partiels se rejoignent sur la grille de réunification (14.5 ; 114.5 ; 214.5 ; 314.5 ; 414.8 ; 514.5 ; 614.5 ; 714.5).

16. Dispositif de mesure de position selon la revendication 1, **caractérisé en ce que** l'au moins un élément rétro-réflecteur est conçu commune une unité de construction monolithique sur un élément de support.

17. Dispositif de mesure de position selon la revendication 1, **caractérisé en ce que** l'unité de balayage (10 ; 110 ; 210 ; 310 ; 410 ; 510 ; 610 ; 710) comprend plusieurs grille de balayage (14.1-14.4 ; 114.1-114.4 ; 214.1-214.4 ; 314.1-314.4 ; 414.1-414.4 ; 514.1-514.4 ; 614.1-614.4 ; 714.1-714.4) ainsi qu'au moins une grille de réunification (14.1-14.4 ; 114.1-114.4 ; 214.1-214.4 ; 314.1-314.4 ; 414.1-414.4 ; 514.1-514.4 ; 614.1-614.4 ; 714.1-714.4), celles-ci étant disposées symétriquement, le plan de symétrie étant orienté parallèlement à la direction de mesurage (x) et parallèlement à l'axe optique (OA).

18. Dispositif de mesure de position selon au moins l'une des revendications 1 à 16, **caractérisé en ce que**, suite à une collimation par le biais d'une optique de collimateur (12), l'unité de balayage (10) est conçue de manière à ce que les faisceaux de rayons émis par une source de lumière (11) :

- rencontrent une première fois la mesure matérialisée à réflexion (20), produisant un fractionnement en deux faisceaux de rayons partiels réfléchis en retour vers l'unité de balayage (10), correspondant à deux ordres de diffraction différents,
- les deux faisceaux de rayons partiels réfléchis en retour sont rétro-réfléchis par l'élément rétro-réflecteur, dans la direction de la mesure matérialisée à réflexion (20), chacun des faisceaux de rayons partiels passant deux fois à travers la grille de balayage (14.1, 14.2, 14.3, 14.4),
- les faisceaux de rayons partiels rencontrant une deuxième fois la mesure matérialisée à réflexion (20) connaissent une nouvelle diffraction et réflexion retour dans la direction de l'unité de balayage (10),
- au moins une paire de faisceaux de rayons partiels réfléchis en retour tombe au même endroit sur la grille de réunification (14.5), avec des angles symétriques ($\alpha$1, $\alpha$2) par rapport à l'axe optique (OA).

19. Dispositif de mesure de position selon au moins l'une des revendications 1 à 17, **caractérisé en ce que** l'unité de balayage (110 ; 210 ; 310 ; 710) est conçue de manière à que, suite à une collimation par le biais d'une optique de collimateur (112 ; 212 ; 313 ; 712), les faisceaux de rayons émis par une source de lumière (111 ; 211 ; 311 ; 711) :

- sont fractionnés en au moins deux faisceaux de rayons partiels dans l'unité de balayage (110 ; 210 ; 310 ; 710), par le biais d'une grille de fractionnement (114.6 ; 214.6 ; 314.6 ; 714.6), correspondant à deux ordres de diffraction différents, et ces faisceaux de rayons partiels se propagent dans la direction de la mesure matérialisée à réflexion (120 ; 220 ; 320 ; 720),

- les faisceaux de rayons partiels tombent ensuite une première fois à différents endroits sur la mesure matérialisée à réflexion (120 ; 220 ; 320 ; 720), où se produit respectivement un fractionnement en plusieurs faisceaux de rayons partiels réfléchis en retour vers l'unité de balayage (110 ; 210 ; 310 ; 710), correspondant à des ordres de diffraction différents,

- les au moins deux faisceaux de rayons partiels rétro-réfléchis dans l'unité de balayage (110 ; 210 ; 310 ; 710) sont réfléchis en retour par l'élément rétro-réflecteur, dans la direction de la mesure matérialisée à réflexion (120 ; 220 ; 320 ; 720), et les faisceaux de rayons partiels passant respectivement deux fois à travers une grille de balayage (14.1-14.4 ; 114.1-114.4 ; 214.1-214.4 ; 314.1-314.4 ; 714.1-714.4),

- les faisceaux de rayons partiels rencontrant une deuxième fois la mesure matérialisée à réflexion (120 ; 220 ; 320 ; 720) en des endroits différents connaissent une nouvelle diffraction et rétro-réflexion dans la direction de l'unité de balayage (110 ; 210 ; 310 ; 710),

- dans l'unité de balayage (110 ; 210 ; 310 ; 710), au moins une paire de faisceaux de rayons partiels rétro-réfléchis rencontre la grille de réunification (114.5 ; 214.5 ; 314.5 ; 714.5) au même endroit, avec des angles symétriques ($\alpha$1, $\alpha$2) par rapport à l'axe optique (OA).

**20.** Dispositif de mesure de position selon la revendication 19, **caractérisé en ce que**

- les grilles de balayage (214.1-214.4) dans l'unité de balayage (210) sont conçues comme des lentilles cylindriques de Fresnel, dont les lignes focales se trouvent dans le plan des éléments réflecteurs (215.1, 215.2), et
- la période de graduation ($TP_{AGO}$) de la grille de fractionnement (214.6) est choisie identique à la période de graduation ($TP_{AG1}$) de la grille de réunification (214.4) et à la période de graduation ($TP_M$) de la mesure matérialisée à réflexion (220).

**21.** Dispositif de mesure de position selon la revendication 19, **caractérisé en ce que** la période de graduation ($TP_M$) de la mesure matérialisée à réflexion (320 ; 720) est choisie de manière à ce que les faisceaux de rayons partiels rétro-réfléchis dans la direction de l'unité de balayage (310 ; 710) se croisent avant leur première rencontre avec une grille de balayage (314.1-314.4 ; 714.1-714.4).

**22.** Dispositif de mesure de position selon la revendication 21, **caractérisé en ce que** la période de graduation ($TP_M$) de la mesure matérialisée à réflexion (320 ; 720) est choisie plus petite que la longueur d'onde ($\lambda$) de la source de lumière utilisée (311 ; 711).

**23.** Dispositif de mesure de position selon la revendication 20, **caractérisé en ce que** l'au moins un élément rétro-réflecteur est conçu comme un élément de lentille/de déviation (714.1, 714.2, 714.3, 714.4) combiné.

**24.** Dispositif de mesure de position selon au moins l'une des revendications 1 à 17, **caractérisé en ce que** l'unité de balayage (410) est conçue de manière à ce que, suite à une collimation par le biais d'une optique de collimateur (412), les faisceaux de rayons émis par une source de lumière (411) :

- sont fractionnés en deux faisceaux de rayons partiels par le biais d'une grille de fractionnement (414.6),
- les deux faisceaux de rayons partiels parviennent ensuite sur une grille auxiliaire de fractionnement (414.7), produisant une déviation d'au moins une partie des faisceaux de rayons partiels, de telle manière que les faisceaux de rayons partiels propagés dans la direction de la mesure matérialisée à réflexion (420) rencontrent la mesure matérialisée à réflexion (420) au même endroit, et
- les faisceaux de rayons partiels rencontrant la mesure matérialisée à réflexion (420) sont fractionnés chacun en plusieurs faisceaux de rayons partiels rétro-réfléchis vers l'unité de balayage (410), correspondant à différents ordres de diffraction,
- les au moins deux faisceaux de rayons partiels rétro-réfléchis dans l'unité de balayage (410) connaissent une rétro-réflexion dans la direction de la mesure matérialisée à réflexion (420), par le biais de l'élément rétro-réflecteur, les faisceaux de rayons partiels passant respectivement deux fois à travers une grille de balayage (414.1, 414.2, 414.3, 414.4),
- les faisceaux de rayons partiels rencontrant la mesure matérialisée à réflexion (420) une deuxième fois au même endroit connaissent une nouvelle diffraction et rétro-réflexion dans la direction de l'unité de balayage (410),
- dans l'unité de balayage (410), au moins une paire de faisceaux de rayons partiels rétro-réfléchis rencontre une grille auxiliaire de réunification (414.4) en différents endroits, où ont lieu une nouvelle diffraction et un nouveau fractionnement, de sorte qu'au moins deux faisceaux de rayons partiels propagés davantage rencontrent la grille de réunification (414.8) au même endroit, avec des angles symétriques par rapport à l'axe optique.

**25.** Dispositif de mesure de position selon au moins l'une des revendications 1 à 16, **caractérisé en ce que** l'unité de balayage (510) est conçu de manière à ce que, suite à une collimation par le biais d'une optique de collimateur (512), les faisceaux de rayons émis par une source de lumière (511) :

- rencontrent une première fois la mesure matérialisée à réflexion (520), conçue comme une grille de diffraction de la lumière réfléchie, où a lieu un fractionnement en deux faisceaux de rayons partiels rétro-réfléchis vers l'unité de balayage (510), correspondant à deux ordres de diffraction différents,
- dans l'unité de balayage (510), les deux faisceaux de rayons partiels rétro-réfléchis sont rétro-réfléchis dans la direction de la mesure matérialisée à réflexion (520) par le biais de l'élément rétro-réflecteur, les faisceaux de rayons partiels passant chacun deux fois à travers une grille de balayage (514.1, 514.2, 514.3, 514.4), et une focalisation en point des faisceaux de rayons partiels au même point d'incidence sur un élément réflecteur plan (515) étant produite lors du premier passage à travers la grille de balayage (514.1, 514.2, 514.3, 514.4),
- les faisceaux de rayons partiels rencontrant une deuxième fois la mesure matérialisée à réflexion (520) connaissent une nouvelle diffraction et rétro-réflexion dans la direction de l'unité de balayage (510),
- dans l'unité de balayage (510), au moins une paire de faisceaux de rayons partiels rétro-réfléchis rencontre la grille de réunification (514.5) au même endroit, avec des angles symétriques par rapport à l'axe optique (OA).

FIG. 1a

OA

11

12

10

15.1

$\alpha_{Roof}$

15.2

13.1

13

$a_{Roof}/2$

14.1

$b_{a1}$

14.2

a

22.1  22.2

22

20

21

Z

Y

X

EP 1 901 041 B1

FIG. 1b

EP 1 901 041 B1

FIG. 1c

13.1

15.1    15.2

Y
Z⊙ → X

FIG. 1d

13.1

14.3    14.5    14.4

14.1    14.2

Y
Z⊙ → X

EP 1 901 041 B1

FIG. 2a

FIG. 2b

EP 1 901 041 B1

FIG. 2d

FIG. 2c

EP 1 901 041 B1

FIG. 2e

FIG. 3a

EP 1 901 041 B1

FIG. 3b

EP 1 901 041 B1

FIG. 3c

FIG. 3d

113.1

113.1

114.3    114.5    114.4

115.1    115.2

114.1    114.6    114.2

Y
Z ⊙ → X

Y
Z ⊙ → X

EP 1 901 041 B1

FIG. 4a

EP 1 901 041 B1

FIG. 4b

EP 1 901 041 B1

FIG. 4c

FIG. 4d

213.1

215.2

215.1

214.4

214.5

213.1

214.3

214.2

214.6

214.1

Y

Z

X

Y

Z

X

EP 1 901 041 B1

FIG. 5a

FIG. 5b

OA

311

312

310

318

318.1

318.2

314.1

314.6

314.2

322

321

320

311

312

318.1

318

318.2

318.3

310

320

Z

Y X

Z

X Y

EP 1 901 041 B1

FIG. 5d

FIG. 5c

FIG. 5e

FIG. 6a

EP 1 901 041 B1

FIG. 6b

EP 1 901 041 B1

FIG. 6c

FIG. 6d

413.1

414.8

415.1            415.2

414.6

413.1

414.3      414.5      414.5      414.4

414.1      414.7      414.7      414.2

Y

Z   X

Y

Z   X

EP 1 901 041 B1

FIG. 7a

EP 1 901 041 B1

FIG. 7b

EP 1 901 041 B1

FIG. 7c

513.1

515

Y
Z⊙ → X

FIG. 7d

513.1

514.3    514.5    514.4

514.1    514.2

Y
Z⊙ → X

EP 1 901 041 B1

48

FIG. 8a

FIG. 8b

EP 1 901 041 B1

FIG. 8c

713.1

715.1 715.2

Y

Z X

FIG. 8d

713.1

714.3 714.5 714.4

714.1 714.6 714.2

Y

Z X

EP 1 901 041 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0223131 A1
- EP 0387520 A2
- DE 4201511 A1
- DE 102005029917
- EP 163362 B1
- EP 446691 B1
- WO 2002023131 A1
- DE 10022619 A1
- US 5497226 A